# EUROPÄISCHE PATENTSCHRIFT

(11) **EP 4 093 530 B1**
(45) Veröffentlichungstag und Bekanntmachung des Hinweises auf die Patenterteilung: **23.04.2025**
(21) Anmeldenummer: 21702394.4
(22) Anmeldetag: 20.01.2021
(51) Int. Cl.: B01D 35/147, B01D 36/00

(54) **FILTER ZUR FILTRIERUNG VON FLUID, BYPASS-VENTILANORDNUNG FÜR EINEN FILTER UND DIFFUSOREINRICHTUNG FÜR EINEN FILTER**
FILTER FOR FILTERING A FLUID, BYPASS VALVE FOR A FILTER AND A DIFFUSER FOR A FILTER
FILTRE POUR FILTRER A FLUIDE, SOUPAPE DE DÉRIVATION POUR FILTRE ET DIFFUSEUR POUR FILTRE

(30) Priorität: 24.01.2020 US 202062965238 P
(43) Veröffentlichungstag der Anmeldung: 30.11.2022
(60) Teilanmeldung: 25163463.0
(73) Patentinhaber: MANN+HUMMEL GmbH, 71636 Ludwigsburg (DE)
(72) Erfinder: SALOM, Rafael, 71686 Remseck (DE); MÄRTZ, Mike, 67376 Harthausen (DE); THALMANN, Christian, 67346 Speyer (DE); WINTER, Mischa, 68782 Brühl (DE)
(74) Vertreter: Mann + Hummel Intellectual Property
(86) Internationale Anmeldenummer: PCT/EP2021/051206
(87) Internationale Veröffentlichungsnummer: WO 2021/148469

(56) Entgegenhaltungen:
- EP-A1- 1 917 086
- EP-A1- 2 207 610
- EP-A2- 0 154 952
- WO-A1-2013/060998
- DE-A1- 10 248 907
- DE-A1- 102011 005 106
- DE-U1- 202005 003 047
- US-A- 3 457 949
- US-A- 3 750 888
- US-A- 3 853 763
- US-A1- 2011 062 061

## Beschreibung

### Technisches Gebiet

Die Erfindung betrifft einen Filter zur Filtrierung von Fluid, mit wenigstens einem Filtergehäuse, welches wenigstens einen Fluideinlass für zu filtrierendes Fluid und wenigstens einen Fluidauslass für filtriertes Fluid aufweist, mit wenigstens einem Filterelement, welches in dem wenigstens einen Filtergehäuse so angeordnet ist, dass es den wenigstens einen Fluideinlass fluidströmungstechnisch von dem wenigstens einen Fluideinlass trennt, mit wenigstens einer Bypass-Ventilanordnung, welche fluidströmungstechnisch zwischen dem wenigstens einen Fluideinlass und dem wenigstens einen Fluidauslass so angeordnet ist, dass die wenigstens eine Bypass-Ventilanordnung in ihrem Öffnungszustand den wenigstens einen Fluideinlass fluidströmungstechnisch mit dem wenigstens einen Fluidauslass verbindet, wobei die wenigstens eine Bypass-Ventilanordnung wenigstens einen Ventil-Verschlusskörper, welcher zwischen wenigstens einer Schließstellung und wenigstens einer Öffnungsstellung bewegbar ist, und wenigstens einem Ventilsitz, an den das wenigstens eine Ventil-Verschlusskörper in wenigstens einer Schließstellung dicht anliegen kann, aufweist.

Ferner betrifft die Erfindung eine Bypass-Ventilanordnung für einen Filter zur Filtrierung von Fluid, wobei die Bypass-Ventilanordnung fluidströmungstechnisch zwischen wenigstens einem Fluideinlass und wenigstens einem Fluidauslass des Filters so angeordnet werden kann, dass die wenigstens eine Bypass-Ventilanordnung in ihrem Öffnungszustand den wenigstens einen Fluideinlass fluidströmungstechnisch mit dem wenigstens einen Fluidauslass verbindet, und wobei die wenigstens eine Bypass-Ventilanordnung wenigstens einen Ventil-Verschlusskörper, welcher zwischen wenigstens einer Schließstellung und wenigstens einer Öffnungsstellung bewegbar ist, und wenigstens einem Ventilsitz, an den das wenigstens eine Ventil-Verschlusskörper in wenigstens einer Schließstellung dicht anliegen kann, aufweist.

Außerdem betrifft die Erfindung ein Filterelement für einen Filter zur Filtrierung von Fluid, mit wenigstens einer Bypass-Ventilanordnung, die an einem Endkörper des Filterelements befestigt so ist, dass die wenigstens eine Bypass-Ventilanordnung in ihrem Öffnungszustand wenigstens eine Rohfluidseite des Filterelements fluidströmungstechnisch mit wenigstens einer Reinfluidseite des Filterelements verbindet, wobei die wenigstens eine Bypass-Ventilanordnung wenigstens einen Ventil-Verschlusskörper, welcher zwischen wenigstens einer Schließstellung und wenigstens einer Öffnungsstellung bewegbar ist, und wenigstens einem Ventilsitz, an den das wenigstens eine Ventil-Verschlusskörper in wenigstens einer Schließstellung dicht anliegen kann, aufweist.

Des Weiteren betrifft die Erfindung einen Filter zur Filtrierung von Fluid, mit wenigstens einem Filtergehäuse, welches wenigstens einen Fluideinlass für zu filtrierendes Fluid und wenigstens einen Fluidauslass für filtriertes Fluid aufweist, mit wenigstens einem Filterelement, welches in dem wenigstens einen Filtergehäuse fluidströmungstechnisch zwischen dem wenigstens einen Fluidauslass und dem wenigstens einen Fluideinlass angeordnet ist, und mit wenigstens einer Diffusoreinrichtung für filtriertes Fluid, welches mit wenigstens einem Fluidauslass fluidleitungstechnisch verbunden ist.

Darüber hinaus betrifft die Erfindung eine Diffusoreinrichtung für einen Filter zur Filtrierung von Fluid, mit wenigstens einem Diffusor-Anschlussabschnitt, mit welchem die Diffusoreinrichtung mit wenigstens einem Fluidauslass eines Filtergehäuses des Filters fluidleitungstechnisch verbunden werden kann.

### Stand der Technik

Aus der US 3.750.888 ist eine Filterbaugruppe bekannt, die in einem hydraulischen Reservoir oder Tank montiert ist. Die Filterbaugruppe umfasst ein zylindrisches Gehäuse, eine konisch geformte Basis, ein kartuschenförmiges Filterelement, das auf der Basis sitzt, eine Auslassöffnung, die durch die Basis hindurch ausgebildet und im Inneren des Filterelements positioniert ist, und ein Diffusionsmittel oder -element. Das Gehäuse ist mit einer Einlassöffnung versehen, durch die Flüssigkeit, die von einem Fernsteuerungssystem zurückgeführt wird, in die Filterbaugruppe geleitet wird. Das Fluid strömt durch das Filterelement, in dessen Innenraum und durch die Auslassöffnung und das Diffusionselement in den Tank. Ein Bypass-Ventil ist an einem Ende des Filterelements beweglich auf dem Verbindungsbolzen montiert. Sollte das Element zugesetzt sein, ermöglicht die daraus resultierende geringe Druckdifferenz über dem Ventil, dass sich das Ventil gegen eine Feder öffnet, damit die rücklaufende Flüssigkeit das Element umgehen kann, bis das Element ausgetauscht wird.

Die DE10248907 A1 zeigt eine Filtereinrichtung, insbesondere zur Flüssigkeitsfilterung in Brennkraftmaschinen, die ein in ein Filtergehäuse einsetzbares Filterelement aufweist, das über eine Klemmeinrichtung im Filtergehäuse zu arretieren ist. Die Klemmeinrichtung umfasst ein Federelement, das das Filterelement mit einer arretierenden Klemmkraft beaufschlagt.

Die US3457949 A zeigt ein Rückschlagventil, das die funktionellen Eigenschaften eines Kugelrückschlagventils in Verbindung mit verbesserten Durchflusseigenschaften mit einem minimierten Durchflusswiderstand durch einen Ventilkörper mit reduzierter Querabmessung bietet. Ein Durchflussregelschieber, der gleitend in einer in einem Ventilkörper definierten Ventilkammer angeordnet ist, hat einen Durchflussregelkopf, der als Kugelsegment ausgebildet ist und einem Ventilsitz gegenübersteht, der im Allgemeinen die Form eines Kegelstumpfes hat.

Aus der US2011062061 AA ist ein Flüssigkeitsfilter für einen Filter bekannt, umfassend ein aufrechtes Gehäuse mit einem Basisteil und einem Deckel, der den Blick auf einen Flüssigkeitsstand ermöglicht. Das Basisteil hat einen Flüssigkeitseinlass und einen Flüssigkeitsauslass. Ein Filterelement hat ein Filtermedium zum Filtern der Flüssigkeit, eine untere Endkappe, die mit dem Flüssigkeitsauslass verbunden ist, und eine obere Endkappe, die oberhalb der unteren Endkappe angeordnet ist.

Die DE102011005106 A1 betrifft ein Umgehungsventil einer von einem fluiden Medium durchströmten, einen veränderlichen Strömungswiderstand aufweisenden Einrichtung, bestehend aus einem Ventilsitz und einem mit dem Ventilsitz zusammenwirkenden beaufschlagten Ventilkörper, der durch eine einen vorgebbaren Grenzwert überschreitende Mediumdruckdifferenz zwischen Anströmseite und Abströmseite des Umgehungsventils in Öffnungsrichtung bewegbar ist.

Die EP1917086 B1 betrifft eine Ölfilteranordnung mit einem Gehäuse, das einen Aufnahmeraum für ein in das Gehäuse einsetzbares, radial mit Öl durchströmbares Filterelement aufweist, mit einem Öleinlass und einem Ölauslass, mit einem im Aufnahmeraum vorhandenen, das Filterelement tragenden Stützrohr, wobei im Stützrohr ein Umgehungsventil vorgesehen ist, welches bei überschreiten eines Grenzdruckes öffnet und durch welches Öl vom Öleinlass unter Umgehung des Filterelements zum Ölauslass strömen kann, wobei das Umgehungsventil einen Ventilsitz, einen mit dem Ventilsitz zusammenwirkenden Ventilkörper und ein käfigartig ausgebildetes Haubenteil umfasst.

Der EP0154952 A2 ist ein Filtereinsatz zu entnehmen, der den Innenraum des Gehäuses in zwei Teilräume unterteilt, dessen erster mit dem Zufluss und dessen zweiter mit dem Abfluss in Verbindung steht, und mit einem verschieblich gelagerten Ventilkörper, der einerseits von dem Medium im ersten Teilraum und andererseits von dem Medium im zweiten Teilraum beaufschlagbar ist und beim Überschreiten eines bestimmten Differenzdruckes der Medien in den beiden Teilräumen gegen die Wirkung eines elastischen Kraftspeichers aus einer Ausgangsstellung heraus verschiebbar ist.

Der Erfindung liegt die Aufgabe zugrunde, einen verbesserten Filter, eine verbesserte Bypass-Ventilanordnung, ein verbessertes Filterelement und eine verbesserte Diffusoreinrichtung bereitzustellen. Insbesondere liegt der Erfindung die Aufgabe zugrunde, einen Filter, eine Bypass-Ventilanordnung, ein Filterelement und eine Diffusoreinrichtung zu gestalten, bei denen eine Behandlung von Fluid, insbesondere die Befreiung von Fluid von ungewünschten Medien, effizienter und/oder zuverlässiger durchgeführt werden kann.

### Offenbarung der Erfindung

Die Aufgabe wird erfindungsgemäß bei einem Filter dadurch gelöst, dass die wenigstens eine Bypass-Ventilanordnung wenigstens ein Ventilgehäuse, in dem das wenigstens eine Ventil-Verschlusskörper bewegbar angeordnet ist, und wenigstens ein Ventilsitzelement, welches wenigstens einen Ventilsitz aufweist, aufweist, wobei das wenigstens eine Ventilsitzelement mittels wenigstens einer mechanischen Verbindung mit wenigstens einem Teil des wenigstens einen Ventilgehäuses verbunden ist, wobei die Verbindung mittels wenigstens einer Relativdrehung zwischen dem wenigstens einen Ventilsitzelement und dem wenigstens einen Teil des wenigstens einen Ventilgehäuses um eine gedachte Ventilachse der wenigstens eine Bypass-Ventilanordnung realisierbar ist.

Erfindungsgemäß weist wenigstens eine Bypass-Ventilanordnung ein Ventilgehäuse auf. In dem Ventilgehäuse ist der wenigstens eine Ventil-Verschlusskörper bewegbar angeordnet. Ferner ist wenigstens ein Ventilsitzelement, welches wenigstens einen Ventilsitz aufweist, mittels wenigstens einer mechanischen Verbindung mit wenigstens einem Teil, insbesondere einer Umfangswand und/oder einem Boden, des wenigstens einen Ventilgehäuses verbunden. Auf diese Weise kann die wenigstens eine Bypass-Ventilanordnung einfacher zusammengebaut werden. Die mechanische Verbindung kann mittels wenigstens einer Relativdrehung um eine gedachte Ventilachse realisierbar sein. Auf diese Weise können das wenigstens eine Ventilsitzelement und der wenigstens eine Teil des wenigstens einen Ventilgehäuses einfacher zusammengebaut werden.

Vorteilhafterweise kann das wenigstens eine Ventilsitzelement das wenigstens eine Ventilgehäuse wenigstens mitbilden. Insbesondere kann eine Umfangswand wenigstens eines Ventilsitzelements eine Umfangswand des wenigstens einen Ventilgehäuses wenigstens mitbilden.

Vorteilhafterweise ist der wenigstens eine Ventil-Verschlusskörper axial zu der Ventilachse bewegbar. Auf diese Weise können Krafteinleitungen innerhalb der wenigstens eine Bypass-Ventilanordnung verbessert werden.

Vorteilhafterweise kann der Filter mindestens eine Einlassöffnung für zu reinigendes Fluid und mindestens eine Auslassöffnung für gereinigtes Fluid aufweisen. Das Filtergehäuse kann zur Befestigung an einem Flüssigkeitsvorratsbehälter, d. h. Kraftstofftank, ausgebildet sein und mindestens einen Gehäusekörper (Gehäuseboden) und mindestens einen Befestigungsflansch an dem Gehäusekörper sowie einen Gehäusedeckel, mit dem eine zu öffnende Einbauöffnung verschließbar ist, aufweisen. Die mindestens eine Einbauöffnung kann an der axialen Oberseite des Gehäusekörpers angeordnet sein.

Ein Filterelement kann auch als Filterpatrone bezeichnet werden. Das Filterelement kann in einem Flüssigkeitsfilter verwendet werden. Das Filterelement kann austauschbar in einem Filtergehäuse angeordnet werden.

Vorteilhafterweise kann wenigstens eine Bypass-Ventilanordnung ein Druckregelventil aufweisen. Mit einem Druckregelventil kann ein Druck zwischen der Eingangsseite und der Ausgangsseite geregelt werden. Wenigstens eine Bypass-Ventilanordnung, insbesondere ein Druckregelventil, kann in einem Flüssigkeitsfilter verwendet werden.

Vorteilhafterweise kann die Bypass-Ventilanordnung ein Ventilgehäuse, ein Ventil-Rückstellelement, insbesondere eine Feder, einen Ventil-Verschlusskörper, insbesondere einen Ventilkörper, und ein Ventilsitzelement, insbesondere einen Ventilsitz, aufweisen. Das Ventil-Rückstellelement und der Ventil-Verschlusskörper können vorteilhafterweise innerhalb des Ventilgehäuses angeordnet sein. Ein erstes axiales Ende des Ventil-Rückstellelements kann am Ventilgehäuse abgestützt sein. Ein zweites axiales Ende des Ventil-Rückstellelements kann auf den Ventil-Verschlusskörper wirken und den Ventil-Verschlusskörper gegen den Ventilsitz des Ventilsitzelements drücken.

Das Ventilsitzelement kann als hohlzylindrische Schraube ausgebildet sein, die ein Außengewinde aufweist. Das Außengewinde kann mit einem Innengewinde korrespondieren, das an einem axialen Ende des Ventilgehäuses vorgesehen sein kann. Die hohlzylindrische Schraube kann an einem ersten axialen Ende ein Handhabungselement, insbesondere einen Betätigungsabschnitt, und an dem zweiten axialen Ende, das dem ersten axialen Ende gegenüberliegt, einen Ventilsitzabschnitt, insbesondere den Ventilsitz, aufweisen. Der Ventil-Verschlusskörper kann an dem Ventilsitz anliegen, wenn das Ventil geschlossen ist. Der Ventil-Verschlusskörper kann sich unter Kompression des Ventil-Rückstellelements von Ventilsitzelement, insbesondere dem Ventilsitz, wegbewegen, wenn der Druck auf den Ventil-Verschlusskörper einen vordefinierten Öffnungsdruck überschreitet.

Bei einer vorteilhaften Ausführungsform kann die wenigstens eine mechanische Verbindung zwischen dem wenigstens einen Ventilsitzelement und dem wenigstens einen Teil des wenigstens einen Ventilgehäuses eine Schraubverbindung sein. Schraubverbindungen können einfach durch eine Relativdrehung, bei der das wenigstens eine Ventilsitzelement relativ zu dem wenigstens einen Teil des wenigstens einen Ventilgehäuses um die Ventilachse gedreht wird, realisiert werden.

Mit Schraubverbindungen kann eine effiziente Kraftübertragung in Richtung axial zur Ventilachse ermöglichen.

Bei einer weiteren vorteilhaften Ausführungsform kann wenigstens ein Ventilsitzelement wenigstens ein Gewinde, insbesondere ein Außengewinde und/oder ein Innengewinde, und/oder der wenigstens eine Teil des wenigstens einen Ventilgehäuses kann wenigstens ein Gewinde, insbesondere ein Innengewinde und/oder ein Außengewinde, aufweisen und/oder wenigstens ein Gewinde wenigstens eines Ventilsitzelements und/oder wenigstens ein Gewinde des wenigstens einen Teils des wenigstens einen Ventilgehäuses kann ein nicht selbstschneidendes Gewinde sein und/oder wenigstens ein Gewinde wenigstens eines Ventilsitzelements und/oder wenigstens ein Gewinde des wenigstens einen Teils des wenigstens einen Ventilgehäuses kann ein selbstschneidendes Gewinde sein. Vorteilhafterweise kann wenigstens ein Ventilsitzelement und der entsprechend korrespondierende wenigstens eine Teil des wenigstens einen Ventilgehäuses jeweils ein Gewinde aufweisen. Auf diese Weise können die Gewinde ineinander geschraubt werden.

Dabei kann wenigstens ein Ventilsitzelement ein Außengewinde und das entsprechende Ventilgehäuse ein Innengewinde aufweisen. So kann das Ventilsitzelement entsprechend in den wenigstens einen Teil des wenigstens einen Ventilgehäuses geschraubt werden. Alternativ kann wenigstens ein Ventilsitzelement wenigstens ein Innengewinde und der entsprechende wenigstens eine Teil des wenigstens einen Ventilgehäuses wenigstens ein Außengewinde aufweisen. Auf diese Weise kann das Ventilsitzelement auf den wenigstens einen Teil des wenigstens einen Ventilgehäuses geschraubt werden.

Wenigstens ein Gewinde kann ein nicht selbstschneidendes Gewinde sein. Auf diese Weise kann das wenigstens eine Gewinde präzise in ein entsprechendes nicht selbstschneidendes Gewinde des korrespondierenden Bauteils geschraubt werden.

Alternativ oder zusätzlich kann wenigstens ein Gewinde ein selbstschneidendes Gewinde sein. Ein selbstschneidendes Gewinde kann in eine Öffnung des korrespondierenden Bauteils geschraubt werden und dort an entsprechendes Gewindeschneiden. Auf diese Weise kann ein Herstellungsaufwand verringert werden.

Erfindungsgemäße weist wenigstens ein Ventilgehäuse wenigstens einen bezüglich der Ventilachse wenigstens radial wirkenden Ventil-Dichtabschnitt auf und/oder wenigstens ein Ventilgehäuse kann wenigstens einen Ventil-Dichtabschnitt aufweisen, welcher dichtend mit wenigstens einem Element-Dichtabschnitt aufseiten wenigstens eines Filterelements zusammenwirkt. Auf diese Weise kann ein an das wenigstens eine Ventilgehäuse angrenzender Bereich abgedichtet werden.

Ein radial dichtend wirkender Ventil-Dichtabschnitt kann einfach mit einer axialen Montagerichtung zwischen den Bauteilen kombiniert werden.

Erfindungsgemäß weist wenigstens ein Ventilgehäuse wenigstens einen Ventil-Dichtabschnitt auf, welcher dichtend mit wenigstens einem Element-Dichtabschnitt aufseiten wenigstens eines Filterelements zusammenwirkt. Auf diese Weise kann die wenigstens eine Bypass-Ventilanordnung dicht an und/oder in dem wenigstens einen Filterelement montiert werden. Dabei können der wenigstens eine Ventil-Dichtabschnitt und der wenigstens eine Element-Dichtabschnitt bezüglich der Ventilachse radial dichtend wirkend. So kann die wenigstens eine Bypass-Ventilanordnung in bezüglich der Ventilachse axialer Richtung in eine entsprechende Öffnung, insbesondere eine Öffnung eines Endkörpers, im Besonderen einer Endscheibe oder Endkappe, des wenigstens einen Filterelements eingebaut werden.

Vorteilhafterweise kann das Ventilgehäuse wenigstens eine radial äußere Dichtfläche aufweisen, die so konfiguriert sein kann, dass sie eine innere Dichtfläche einer in einem Endkörper eines Filterelements vorgesehenen Öffnung abdichtend berührt.

In der erfindungsgemäßen Ausführungsform weist wenigstens ein Ventilsitzelement wenigstens ein Gehäuse-Befestigungselement auf, mit dem das wenigstens eine Ventilsitzelement mit wenigstens einem Teil des wenigstens einen Filtergehäuses verbunden ist. Auf diese Weise kann das wenigstens eine Ventilsitzelement und damit über die mechanische Verbindung mit dem Ventilgehäuse die gesamte Bypass-Ventilanordnung an dem Teil des wenigstens einen Filtergehäuses gehalten werden.

Vorteilhaftweise kann wenigstens ein Gehäuse-Befestigungselement Teil einer dreh-und/oder steckbaren Verbindung, insbesondere einer Rastverbindung, Steckverbindung, Schnappverbindung, Schraubverbindung, bajonettverschlussartigen Verbindung oder dergleichen, sein. Derartige Verbindungen können einfach verbunden werden. Ferner können dreh- und/oder steckbare Verbindungen auch so ausgestaltet sein, dass sie zerstörungsfrei wieder lösbar sind. So kann der wenigstens eine Teil des wenigstens einen Filtergehäuses und/oder das wenigstens eine Ventilsitzelement wieder verwendet werden.

Erfindungsgemäß weist wenigstens ein Gehäuse-Befestigungselement wenigstens eines Ventilsitzelements wenigstens einen Rasthaken und/oder eine Rasthakenanordnung auf. Rasthaken können einfach mittels einer Steckverbindung verbunden werden.

Erfindungsgemäß ist das wenigstens eine Ventilsitzelement insbesondere mittels wenigstens eines Gehäuse-Befestigungselements mit einem Gehäusedeckel des wenigstens einen Filtergehäuses verbunden. Auf diese Weise kann das wenigstens eine Ventilsitzelement und somit die wenigstens eine Bypass-Ventilanordnung gemeinsam mit dem Gehäusedeckel von dem restlichen Filtergehäuse, insbesondere einem Filtertopf, getrennt werden.

Vorteilhafterweise kann das Ventilgehäuse einen Einrastabschnitt zum Einrasten der Bypass-Ventilanordnung an entsprechenden Einrastabschnitten eines Filtergehäusedeckels aufweisen.

Bei einer weiteren vorteilhaften Ausführungsform kann wenigstens ein Ventilsitzelement wenigstens einen Handhabungsabschnitt aufweisen, an dem das wenigstens eine Ventilsitzelement zum Verbinden mit dem wenigstens einen Ventilgehäuse gehandhabt werden kann. Auf diese Weise können das wenigstens eine Ventilsitzelement und das wenigstens eine Ventilgehäuse einfacher zusammengebaut werden.

Vorteilhafterweise kann wenigstens ein Handhabungsabschnitt wenigstens eine Aufnahme für ein Handhabungswerkzeug, insbesondere einen Schraubenschlüssel, im Besonderen einen Innensechskant-Schlüssel, oder dergleichen, aufweisen. Auf diese Weise können Montagekräfte zum Zusammenbau oder Demontagekräfte Kräfte zum Trennen der Bauteile besser eingeleitet werden.

Vorteilhafterweise kann der wenigstens eine Handhabungsabschnitt wenigstens einen Durchlass für Fluid aufweisen. Auf diese Weise kann der wenigstens eine Handhabungsabschnitt zusätzlich als Einlass oder Auslass für Fluid dienen, welches im Öffnungszustand die Bypass-Ventilanordnung passieren soll.

Bei einer weiteren vorteilhaften Ausführungsform kann wenigstens eine Bypass-Ventilanordnung wenigstens ein Ventil-Rückstellelement aufweisen, welches an wenigstens einem Ventil-Verschlusskörper einerseits und wenigstens einem Ventilgehäuse andererseits angreift. Mit dem wenigstens einen Ventil-Rückstellelement kann der wenigstens eine Ventil-Verschlusskörper in seiner Schließstellung gegen den wenigstens einen Ventilsitz gedrückt werden.

Vorteilhafterweise kann wenigstens ein Ventil-Rückstellelement wenigstens ein elastisches Rückstellelement, insbesondere ein Federelement, oder dergleichen sein. Elastische Ventil-Rückstellelemente können nach der Wegnahme der Verformungskraft ihre ursprüngliche Form wieder einnehmen. Federelemente können technisch einfach realisiert werden. Vorteilhafterweise kann wenigstens ein Ventil-Rückstellelement wenigstens eine Schraubenfeder aufweisen. Schraubenfedern können platzsparend in axialer Richtung wirkend, insbesondere axial zur Ventilachse, angeordnet werden.

Vorteilhafterweise kann wenigstens ein Ventil-Rückstellelement wenigstens eine Druck-Schraubenfeder aufweisen. Druck-Schraubenfedern können sich auf der dem Ventilsitz abgewandten Seite eines mit dem Ventilsitz korrespondierenden Abschnitts, insbesondere einem Ventilteller, des wenigstens einen Ventil-Verschlusskörpers einerseits und an einem entsprechenden Abschnitt des Ventilgehäuses andererseits abstützen.

Bei einer weiteren vorteilhaften Ausführungsform kann wenigstens ein Ventilsitzelement und/oder der wenigstens eine Teil des wenigstens einen Ventilgehäuses wenigstens eine Dichteinrichtung aufweisen zur Abdichtung eines Bereichs zwischen dem wenigstens einen Ventilsitzelement und dem wenigstens einen Teil des wenigstens einen Ventilgehäuses. Auf diese Weise kann verhindert werden, dass in einer Schließstellung pflückt durch die wenigstens eine Bypass-Ventilanordnung strömen kann.

Vorteilhafterweise kann wenigstens ein Dichtelement an wenigstens einer bezüglich wenigstens einer Ventilachse radial inneren und/oder einer radial äußeren Umfangsseite des wenigstens einen Ventilsitzelements angeordnet sein. Alternativ oder zusätzlich kann wenigstens ein Dichtelement an wenigstens einer bezüglich wenigstens einer Ventilachse radial inneren und/oder einer radial äußeren Umfangsseite des wenigstens einen Teils des wenigstens einen Ventilgehäuses angeordnet sein. So kann ein Bereich zwischen den jeweiligen Umfangsseiten des wenigstens einen Ventilsitzelements und des wenigstens einen Teils des wenigstens einen Ventilgehäuses abgedichtet werden.

Vorteilhafterweise kann wenigstens ein Dichtelement wenigstens eine Dichtwulst aufweisen. Eine Dichtwulst kann einfach insbesondere an einer Umfangsseite realisiert werden.

Vorteilhafterweise kann wenigstens ein Ventilgehäuse wenigstens eine Durchflussöffnung für Fluid aufweisen. Auf diese Weise kann das Fluid in das Ventilgehäuse und aus diesem heraus gelangen.

Vorteilhafterweise kann wenigstens ein Ventilgehäuse als Ventilkorb oder Ventilkäfig realisiert sein. Bei einem Ventilkorb oder Ventilkäfig weist wenigstens eine Wand eine Vielzahl von Öffnungen auf. Vorteilhafterweise kann die Wand aus mehreren Streben realisiert sein. Die Öffnungen in einer Wand des Ventilgehäuses können als Durchflussöffnungen für Fluid dienen.

Vorteilhafterweise kann wenigstens ein Ventilgehäuse Kunststoff, Metall, Verbundwerkstoff oder dergleichen aufweisen oder daraus bestehen. Alternativ oder zusätzlich kann wenigstens ein Ventilsitzelement Kunststoff, Metall, Verbundstoff oder dergleichen aufweisen oder daraus bestehen. Kunststoff kann einfach geformt werden. Metall kann stabil realisiert werden. Aus Metall kann vorteilhafterweise ein selbstschneidendes Gewinde realisiert werden. In Kunststoffmaterial können selbstschneidende Gewinde einfach eingeschraubt werden.

Bei einer weiteren vorteilhaften Ausführungsform kann der Filter ein In-Tank-Filter sein und/oder der Filter ein Flüssigkeitsfilter und/oder ein Gasfilter sein.

Ein In-Tank-Filter wird in einem Tank für das Fluid, insbesondere ein Flüssigkeitstank, angeordnet zur Filtrierung des Fluids beim Eintritt in den Tank oder beim Austritt aus dem Tank. Mit einem Flüssigkeitsfilter können Flüssigkeiten von Verschmutzungen, insbesondere Partikeln und/oder Gasen, insbesondere Luft, getrennt werden.

Vorteilhafterweise kann der Filter ein Flüssigkeitsfilter sein. Mit dem Flüssigkeitsfilter können Flüssigkeiten, insbesondere Öl, Kraftstoff, Hydraulikflüssigkeit, Prozessflüssigkeit, Harnstoff-Wasser-Lösung, Wasser oder dergleichen filtriert werden. Vorteilhafterweise kann der Filter ein Erodierfilter sein.

Alternativ oder zusätzlich kann der Filter ein Gasfilter, insbesondere ein Luftfilter, sein. Auf diese Weise kann mit dem Filter auch gasförmiges Fluid, insbesondere Luft, Druckluft, Kompressorluft, Sauerstoff oder dergleichen, von Partikeln, insbesondere Schmutz, Staub, Öl oder dergleichen, befreit werden.

Die Erfindung kann zur Reinigung von Betriebsfluiden von Brennkraftmaschinen, insbesondere Kraftstoff, Öl oder Luft, oder von Hydrauliksystemen insbesondere von Kraftfahrzeugen dienen.

Die Erfindung kann bei Kraftfahrzeugen, insbesondere Personenkraftwagen, Lastkraftwagen, Motorrädern, Traktoren, Bussen, landwirtschaftlichen und/oder Bau-Fahrzeugen, Bau-/Landmaschinen, Kompressoren, Industriemotoren oder sonstigen Geräten insbesondere mit Verbrennungsmotoren eingesetzt werden. Die Erfindung kann bei Land-, Wasser- und/oder Luftfahrzeugen Verwendung finden.

Vorteilhafterweise kann der Filter ein Filtergehäuse aufweisen, das zur Befestigung an einem Fluidspeicherbehälter, insbesondere einem Kraftstofftank, einem Öltank, einem Tank für Hydrauliköl, einem Wassertank, einem Tank für Harnstoff-Wasser-Lösung, einem Tank für Hydraulikflüssigkeit, einem Lufttank, einem Gastank oder dergleichen, geeignet ist.

Vorteilhafterweise kann das Filtergehäuse mindestens einen Gehäusekörper und mindestens einen Montageflansch aufweisen, der zur Befestigung an einer Einbauöffnung eines Flüssigkeitsspeicher Behälters, Tanks geeignet ist.

Vorteilhafterweise kann das Filtergehäuse wenigstens einen Gehäusedeckel aufweisen. Mit einem Gehäusedeckel kann eine insbesondere öffenbare Einbauöffnung verschließbar sein. Vorteilhafterweise kann die mindestens eine Einbauöffnung an der axialen Oberseite eines Filtertopfes des Filtergehäuses angeordnet sein.

Bei einer weiteren vorteilhaften Ausführungsform kann wenigstens ein Ventilsitzelement ein Hohlzylinder mit wenigstens einem Gewinde, insbesondere einem Innengewinde und/oder Außengewinde, sein. Durch einen Hohlzylinder kann Fluid strömen. So kann das wenigstens eine Ventilsitzelement zusätzlich als Fluidkanal dienen. Mit einem Innengewinde und/oder einem Außengewinde kann eine Schraubverbindung zwischen dem wenigstens einen Ventilsitzelement und dem wenigstens einen Ventilgehäuse hergestellt werden, welche mittels einer Drehbewegung verbunden und getrennt werden kann.

Bei einer weiteren vorteilhaften Ausführungsform kann der Filter wenigstens eine Diffusoreinrichtung aufweisen, welche mit wenigstens einem Fluidauslass verbunden ist. Mit wenigstens einer Diffusoreinrichtung kann ein Strömungsquerschnitt des austretenden filtrierten Fluids vergrößert werden. So kann eine Strömung des Fluids beruhigt werden. Etwa in einer Flüssigkeit enthaltene Gaspartikel, insbesondere Luftpartikel, können so besser aus dem filtrierten Fluid abgeschieden werden.

Eine Diffusoreinrichtung kann an einem Fluidauslass eines Flüssigkeitsfilters in einem Tank, insbesondere zur Verwendung beim Eintauchen in die in einem Tank gelagerte Flüssigkeit, angeordnet werden.

Vorteilhafterweise kann die Diffusoreinrichtung in die in einem Tank gelagerte Flüssigkeit eingetaucht werden. Auf diese Weise kann über Diffusoreinrichtung die mit dem Filter gereinigte Flüssigkeit in dem Tank verteilt werden.

Ferner wird die Aufgabe erfindungsgemäß bei der Bypass-Ventilanordnung dadurch gelöst, dass die wenigstens eine Bypass-Ventilanordnung wenigstens ein Ventilgehäuse, in dem das wenigstens eine Ventil-Verschlusskörper bewegbar angeordnet ist, und wenigstens ein Ventilsitzelement, welches wenigstens einen Ventilsitz aufweist, aufweist, wobei das wenigstens eine Ventilsitzelement mittels wenigstens einer mechanischen Verbindung mit wenigstens einem Teil des wenigstens einen Ventilgehäuses verbunden ist, wobei die mechanische Verbindung mittels wenigstens einer Relativdrehung zwischen dem wenigstens einen Ventilsitzelement und dem wenigstens einen Teil des wenigstens einen Ventilgehäuses um eine gedachte Ventilachse der wenigstens eine Bypass-Ventilanordnung realisierbar ist.

Außerdem wird die Aufgabe erfindungsgemäß bei dem Filterelement dadurch gelöst, dass das Filterelement wenigstens einer Aufnahme für wenigstens eine Bypass-Ventilanordnung aufweist.

Erfindungsgemäß weist das Filterelement wenigstens eine Aufnahme für wenigstens eine Bypass-Ventilanordnung auf. Auf diese Weise kann die Bypass-Ventilanordnung an dem Filterelement montiert werden.

Bei einer vorteilhaften Ausführungsform kann das Filterelement ein Hohlfilterelement sein, bei dem ein Filtermedium einen Elementinnenraum wenigstens teilweise umgibt.

Ein Hohlfilterelement zeichnet sich dadurch aus, dass es wenigstens einen Elementinnenraum aufweist, welcher von Filtermedium umgeben wird. Das Filtermedium kann von dem zu filtrierenden Fluid von außen nach innen zum Elementinnenraum durchströmt werden oder umgekehrt. Der Elementinnenraum verfügt über einen Fluiddurchlass nach außen, durch den, je nach Strömungsrichtung, das filtrierte Fluid den Elementinnenraum verlassen oder zu filtrierendes Fluid in diesen gelangen kann. Das Filtermedium kann den Elementinnenraum bezüglich einer Elementachse umfangsmäßig umgeben. An wenigstens einer bezüglich der Elementachse axialen Stirnseite kann das Filtermedium mit einem Endkörper, insbesondere einer Endscheibe oder Endkappe, die auch als Endkappe bezeichnet werden kann, verbunden sein. Wenigstens ein Endkörper kann wenigstens eine Durchlassöffnung für den Elementinnenraum aufweisen.

Bei dem Hohlfilterelement kann es sich vorteilhafterweise um ein so genanntes Rundfilterelement mit einem runden Querschnitt, ein ovales Rundfilterelement mit einem ovalen Querschnitt, ein flach-ovales Rundfilterelement mit einem abgeflachten ovalen Querschnitt, ein konisches Rundfilterelement, bei dem sich der runde Querschnitt in axialer Richtung zu einer Hauptachse verjüngt, ein konisch-ovales Rundfilterelement, bei dem sich der ovale Querschnitt in axialer Richtung zumindest in Richtung einer Querachse verjüngt, ein konisches flach-ovales Rundfilterelement, bei dem sich der flach-ovale Querschnitt in axialer Richtung zumindest in Richtung einer Querachse verjüngt, oder ein Hohlfilterelement mit einem andersartigen, insbesondere einem eckigen, Querschnitt und/oder einem andersartigen axialen Querschnittsverlauf in Richtung einer Elementachse, handeln.

Das Filtermedium kann vorteilhafterweise bezüglich der Elementachse umfangsmäßig geschlossen oder offen sein. Das Filtermedium kann insbesondere sternförmig, bevorzugt zickzackförmig oder wellenförmig, gefaltet oder gebogen sein. Das Filtermedium kann auch ungefaltet oder ungebogen sein.

Das zu filtrierende Fluid kann das Filtermedium von außen nach innen in den Elementinnenraum oder vom Elementinnenraum nach außen durchströmen. Ferner kann in dem Elementinnenraum wenigstens eine Bypass-Ventilanordnung platzsparend untergebracht werden.

Vorteilhafterweise kann wenigstens ein Endkörper wenigstens eine Öffnung für wenigstens eine Bypass-Ventilanordnung aufweisen. In die wenigstens eine Öffnung kann die wenigstens eine Bypass-Ventilanordnung eingesteckt werden. Die wenigstens eine Bypass-Ventilanordnung kann so platzsparend wenigstens teilweise in einem Elementinnenraum des wenigstens einen Filterelements angeordnet werden. Die wenigstens eine Öffnung und der Elementinnenraum können so als Aufnahme des wenigstens einen Filterelements für die wenigstens eine Bypass-Ventilanordnung dienen.

Erfindungsgemäß ist an einen Endkörper wenigstens ein Element-Dichtabschnitt angeordnet. Mit dem wenigstens einen Element-Dichtabschnitt kann wenigstens ein Ventil-Dichtabschnitt aufseiten der wenigstens einen Bypass-Ventilanordnung dichtend zusammenwirken.

Vorteilhafterweise kann das Hohlfilterelement einen äußeren Strömungsschutzabschnitt aufweisen. Auf diese Weise kann der Filterkörper vor direkter Fluidströmung, insbesondere radial zu einer Elementachse, geschützt werden. Der Strömungsschutzbereich kann in Verbindung mit wenigstens einem Endkörper realisiert sein.

Vorteilhafterweise kann wenigstens ein Filterelement ein hohlzylindrisches Filtermedium und zwei Endkappen aufweisen, die die axialen Stirnseiten des Filtermediums abschließen. Eine erste Endkappe kann einen flachen, ringförmigen Basisabschnitt aufweisen. Ein äußerer zylindrischer Strömungsschutzabschnitt kann vom äußeren Rand des Basisabschnitts in Richtung der zweiten Endkappe abstehen. Der äußere zylindrische Strömungsschutzabschnitt kann eine axiale Länge aufweisen, die so gestaltet ist, dass das Filtermedium vor direkter radialer Strömung, die durch einen Fluid-Einlasskanal in das Filtergehäuse eintritt, geschützt ist.

Vorteilhafterweise kann die erste Endkappe eine zentrale Öffnung aufweisen, die eine radiale Dichtung umfasst, die so konfiguriert ist, dass sie eine äußere Dichtfläche eines an der zentralen Öffnung der ersten Endkappe angeordneten Bypass-Ventilanordnung abdichtend berühren kann.

Des Weiteren wird die Aufgabe erfindungsgemäß bei dem Filter dadurch gelöst, dass die wenigstens eine Diffusoreinrichtung mehrere Fluidleitflächen aufweist.

Mit den Fluidleitflächen kann ein Strömungsverlauf des filtrierten Fluids, welches aus dem wenigstens einen Fluidauslass des Filtergehäuses austritt, beeinflusst werden. So die Fluidströmung beruhigt werden. Bei flüssigen Fluiden können etwa vorhandene Gasblasen, insbesondere Luftblasen, bei ruhiger Fluidströmung besser abgeschieden werden als bei turbulenter Fluidströmung.

Bei der Verwendung des Filters als sogenannter In-Tank-Filter kann das filtrierte Fluid über die wenigstens eine Diffusoreinrichtung in den Tank abgegeben werden mit den Fluidleitflächen wird die Strömung des Fluids so beruhigt, dass die Verweilzeit des Fluids im Tank vergrößert wird. Je länger die Verweilzeit des Fluids im Tank ist, desto besser ist die Abscheidung von etwa vorhandenem Gas, insbesondere Luft, von dem Fluid. Durch die Verwendung von mehreren Fluidleitflächen kann die Fluidströmung des filtrierten Fluids gezielt beeinflusst werden.

Mit mehreren Fluidleitflächen können Fluidkanäle begrenzt oder voneinander abgegrenzt werden.

Vorteilhafterweise kann die wenigstens eine Diffusoreinrichtung als einstückige Komponente realisiert sein. Auf diese Weise kann die Stabilität der wenigstens eine Diffusoreinrichtung erhöht werden.

Vorteilhafterweise kann die wenigstens eine Diffusoreinrichtung unter Verwendung von thermoplastischem Material, insbesondere aus einer Gruppe von Polyamid, Polyester, Polypropylen oder einem anderen thermoplastischen Material, realisiert sein. Vorteilhafterweise kann die wenigstens eine Diffusoreinrichtung nach einem Spritzgussverfahren hergestellt sein.

Bei einer vorteilhaften Ausführungsform kann die wenigstens eine Diffusoreinrichtung wenigstens einen Fluidleitkanal aufweisen und/oder wenigstens ein Fluidleitkanal wenigstens einer Diffusoreinrichtung kann mit wenigstens einer Fluidleitfläche begrenzt sein. In einem Fluidleitkanal kann der Fluidstrom kontrolliert geführt werden. Auf diese Weise kann die Strömung besser beruhigt werden.

Vorteilhafterweise kann wenigstens ein Fluidkanal einen runden oder ovalen Querschnitt aufweisen. Auf diese Weise kann der wenigstens eine Fluidkanal mit einer einzigen umfangsmäßig zusammenhängenden Fluidleitfläche begrenzt werden.

Alternativ oder zusätzlich kann wenigstens ein Fluidleitkanal einen eckigen, insbesondere quadratischen, dreieckigen oder dergleichen, Querschnitt aufweisen. Auf diese Weise kann der wenigstens eine Fluidkanal mit mehreren Fluidleitflächen begrenzt werden.

Bei einer weiteren vorteilhaften Ausführungsform können wenigstens zwei Fluidleitflächen wenigstens abschnittsweise parallel zueinander verlaufen und/oder wenigstens ein Fluidleitkanal wenigstens abschnittsweise einen konstanten Querschnitt aufweisen und/oder wenigstens zwei Fluidleitflächen wenigstens abschnittsweise, in Fluidströmungsrichtung betrachtet , voneinander weg verlaufen und/oder wenigstens ein Fluidleitkanal sich wenigstens abschnittsweise, in Fluidströmungsrichtung betrachtet, aufweiten. Auf diese Weise kann der Verlauf der Fluidleitflächen und/oder des Fluidleitkanals entsprechend an die Erfordernisse angepasst werden.

Mit wenigstens zwei Fluidleitflächen, die wenigstens abschnittsweise parallel zueinander verlaufen, und/oder wenigstens einem Fluidleitkanal, welcher wenigstens abschnittsweise einen konstanten Querschnitt aufweist, kann eine gleichmäßige Fluidströmung erreicht werden.

Mit zwei Fluidleitflächen, welche wenigstens abschnittsweise, in Fluidströmungsrichtung betrachtet, voneinander weg verlaufen, und/oder wenigstens einem Fluidleitkanal, der sich wenigstens abschnittsweise, in Fluidströmungsrichtung betrachtet, aufweitet, kann eine Strömungsquerschnitt vergrößert und damit die Strömungsgeschwindigkeit verringert werden.

Bei einer weiteren vorteilhaften Ausführungsform kann wenigstens eine Fluidleitfläche wenigstens abschnittsweise unter einem Winkel zwischen etwa 90° und 180° gegenüber einer Haupt-Einströmachse der wenigstens einen Diffusoreinrichtung verlaufen und/oder wenigstens eine Kanalachse wenigstens eines Fluidleitkanals kann unter einem Winkel zwischen etwa 90° und 180° gegenüber einer Haupt-Einströmachse der wenigstens einen Diffusoreinrichtung verlaufen. Auf diese Weise kann die Strömungsrichtung des austretenden, filtrierten Fluids entsprechend um einen Winkel zwischen 90° und 180° verändert werden. Insgesamt kann so die Strömungsgeschwindigkeit weiter verringert werden. Die Abscheidung von Gasblasen kann so weiter verbessert werden.

Vorteilhafterweise kann die wenigstens eine Fluidleitfläche und/oder die wenigstens eine Kanalachse unter einem Winkel von mehr als 90°, bevorzugt mehr als 130°, bevorzugt weniger als 170°, gegenüber der Haupt-Einströmachse verlaufen.

Die Haupt-Einströmachse im Sinne der Erfindung ist eine gedachte Achse, entlang der das filtrierte Fluid aus dem Fluidauslass des Filtergehäuses in einen Diffusor-Einlasskanal der Diffusoreinrichtung gelangt.

Vorteilhafterweise kann die Haupt-Einströmachse parallel oder koaxial zu einer Filterachse des Filters und/oder einer Filterelementachse eines insbesondere hohlen Filterelements verlaufen. Auf diese Weise kann die Anordnung des Filters mit der Diffusoreinrichtung in einer Linie erfolgen. So kann die Anordnung insgesamt schmaler aufgebaut sein.

Bei einer weiteren vorteilhaften Ausführungsform können wenigstens zwei Fluidleitflächen und/oder wenigstens zwei Fluidleitkanäle auf unterschiedlichen Seiten bezüglich einer Haupt-Einströmachse der wenigstens einen Diffusoreinrichtung angeordnet sein und/oder wenigstens zwei Fluidleitflächen und/oder wenigstens zwei Fluidleitkanäle auf derselben Seite bezüglich der Haupt-Einströmachse der wenigstens einen Diffusoreinrichtung angeordnet sein. Auf diese Weise kann insgesamt ein Querschnitt des ausströmenden filtrierten Fluids aus der Diffusoreinrichtung vergrößert werden. Das Fluid kann so insgesamt gleichmäßiger verteilt werden. Außerdem kann eine Strömungsgeschwindigkeit so weiter verringert werden.

Vorteilhafterweise können auf gegenüberliegenden Seiten Fluidleitflächen und/oder Fluidkanälen angeordnet sein. So kann die wenigstens eine Diffusoreinrichtung insgesamt symmetrisch aufgebaut werden.

Alternativ oder zusätzlich können auf einer Seite mehrere Fluidleitflächen und/oder Fluidkanäle angeordnet sein. So kann ein austrittsseitiger Strömungsquerschnitt auf einer Seite der Haupt-Einströmachse insgesamt vergrößert werden.

Bei einer weiteren vorteilhaften Ausführungsform kann wenigstens eine Fluidleitfläche und/oder wenigstens ein Fluidleitkanal wenigstens abschnittsweise gekrümmt verlaufen und/oder wenigstens eine Fluidleitfläche und/oder ein Fluidleitkanal wenigstens abschnittsweise gerade verlaufen und/oder wenigstens ein Fluidleitkanal wenigstens abschnittsweise spiralförmig und/oder schraubenförmig verlaufen.

Mit einem gekrümmten Verlauf kann die wenigstens eine Fluidleitfläche und/oder der wenigstens einen Fluidleitkanal insgesamt verlängert werden, ohne dass die Außenmaße der Diffusoreinrichtung vergrößert werden müssen. Auf diese Weise kann die Verweildauer des Fluids an der wenigstens einen Fluidleitfläche und/oder in dem wenigstens einen Fluidleitkanal verlängert und damit das Fluid weiter beruhigt werden.

Gerade verlaufende Fluidleitflächen und/oder Fluidleitkanäle können technisch einfacher realisiert werden.

Bei spiralförmigen und/oder schraubenförmigen Fluidleitkanälen kann ein Verhältnis zwischen Kanallänge und benötigtem Bauraum weiter verbessert werden.

Bei einer weiteren vorteilhaften Ausführungsform kann wenigstens eine Diffusoreinrichtung wenigstens einen Diffusor-Anschlussabschnitt aufweisen zum Anschluss an wenigstens einen Fluidauslass wenigstens eines Filtergehäuses und/oder wenigstens ein Anschluss-Dichtelement aufweisen zur Abdichtung der wenigstens einen Diffusoreinrichtung gegenüber wenigstens einem Fluidauslass wenigstens eines Filtergehäuses.

Mit einem Diffusor-Anschlussabschnitt kann die wenigstens eine Diffusoreinrichtung einfach fluidleitungstechnisch mit dem wenigstens einen Fluidauslass verbunden werden.

Mit wenigstens einem Anschluss-Dichtelement kann verhindert werden, dass Fluid unkontrolliert zwischen der wenigstens einen Diffusoreinrichtung und dem wenigstens einen Fluidauslass des wenigstens einen Filtergehäuses austreten kann.

Vorteilhafterweise kann wenigstens ein Anschluss-Dichtelement wenigstens eine Dichtfläche aufweisen. An einer Dichtfläche kann ein entsprechendes Dichtelement, insbesondere ein Dichtkörper, aufseiten des wenigstens einen Fluidauslasses dichtend anliegen. Alternativ oder zusätzlich kann wenigstens ein Anschluss-Dichtelement wenigstens einen Dichtkörper aufweisen. Ein Dichtkörper kann an einem entsprechenden Dichtelement, insbesondere einer Dichtfläche, aufseiten des wenigstens einen Fluidauslasses dichtend anliegen.

Vorteilhafterweise kann wenigstens ein Dichtkörper als Dichtring und/oder wenigstens eine Dichtfläche als umfangsmäßig zusammenhängende Dichtfläche ausgestaltet sein. Mit derartigen Dichtkörper und Dichtflächen kann eine umfangsmäßige Abdichtung realisiert werden.

Vorteilhafterweise kann das wenigstens eine Anschluss-Dichtelement bezüglich der Diffusor-Hauptstromachse in radialer Richtung und/oder in axialer Richtung dichtend wirken. Auf diese Weise kann die Dichtwirkung insgesamt verbessert werden. Je nach Ausgestaltung kann auch eine entsprechende Einbautoleranz realisiert werden.

Bei einer weiteren vorteilhaften Ausführungsform kann wenigstens eine Diffusoreinrichtung wenigstens ein Diffusor-Fixierelement aufweisen zur Fixierung der wenigstens einen Diffusoreinrichtung an dem wenigstens einen Filtergehäuse. Auf diese Weise kann verhindert werden, dass sich die an den Fluidauslass angeschlossene wenigstens eine Diffusoreinrichtung unkontrolliert lösen kann.

Vorteilhafterweise kann wenigstens ein Diffusor-Fixierelement schnell aktivierbar sein. Auf diese Weise kann die Montage, insbesondere beschleunigt, vereinfacht werden
Vorteilhafterweise kann wenigstens ein Diffusor-Fixierelement ein zerstörungsfrei wieder lösbares Fixierelement sein. Auf diese Weise kann die Fixierung bei Bedarf, insbesondere zu Wartungszwecken und/oder für einen Austausch der wenigstens einen Diffusoreinrichtung, zerstörungsfrei gelöst und wieder aktiviert werden.

Vorteilhafterweise kann wenigstens ein Diffusor-Fixierelement eine dreh- und/oder steckbare Fixiereinrichtung, insbesondere eine Rastverbindung, eine Schnappverbindung, eine Schraubverbindung, eine bei bajonettverschlussartige Verbindung, eine Steckverbindung oder eine Kombination unterschiedlicher Verbindungen, aufweisen oder daraus bestehen. Derartige Fixiereinrichtungen können einfach und schnell aktiviert werden und bei Bedarf zerstörungsfrei gelöst werden.

Vorteilhafterweise kann wenigstens ein Diffusor-Fixierelement ein Rasthaken sein. Ein Rasthaken kann einfach mit einem entsprechenden Vorsprung aufseiten des Filtergehäuses verbunden werden.

Alternativ kann das wenigstens eine Filtergehäuse wenigstens einen Rasthaken aufweisen und die wenigstens eine Diffusoreinrichtung kann wenigstens ein Diffusor-Fixierelement in Form eines Vorsprungs aufweisen, welcher mit dem wenigstens einen Rasthaken fixierend zusammenwirken kann.

Bei einer weiteren vorteilhaften Ausführungsform kann wenigstens eine Diffusoreinrichtung wenigstens einen Diffusor-Einlasskanal aufweisen, der mit wenigstens einem Fluidleitkanal verbunden ist und/oder zu wenigstens einer Fluidleitfläche führt, und/oder eine Haupt-Einströmachse der wenigstens einen Diffusoreinrichtung kann innerhalb wenigstens eines Diffusor-Einlasskanals verlaufen und/oder wenigstens ein Diffusor-Einlasskanal wenigstens einer Diffusoreinrichtung kann wenigstens abschnittsweise einen runden Querschnitt aufweisen und/oder wenigstens ein Diffusor-Einlasskanal wenigstens einer Diffusoreinrichtung kann wenigstens abschnittsweise einen konstanten Querschnitt aufweisen.

Mit einem Diffusor-Einlasskanal kann der wenigstens eine Fluidauslass des wenigstens einen Filtergehäuses mit dem wenigstens einen Fluidleitkanal und/oder der wenigstens einen Fluidleitfläche verbunden werden. So kann der Diffusor-Einlasskanal gewisserma-βen als Adapter zwischen dem Fluidauslass des Filtergehäuses und des wenigstens einen Fluidkanals und/oder wenigstens eine Fluidleitfläche wirken.

Mit dem wenigstens einen Diffusor-Einlasskanal kann die geometrische Form, insbesondere der Querschnitt, des Fluidauslasses des wenigstens einen Filtergehäuses an die geometrische Form, insbesondere den Querschnitt im Bereich des wenigstens einen Fluidleitkanals und/oder der wenigstens einen Fluidleitfläche angepasst werden.

Ferner kann mit dem wenigstens ein Diffusor-Einlasskanal der Strömungsverlauf des filtrierten Fluids vom Fluidauslass zu dem Fluidleitkanal und der wenigstens einen Fluidleitfläche angepasst werden.

Eine Haupt-Einströmachse der wenigstens einen Diffusoreinrichtung kann in dem wenigstens einen Diffusor-Einlasskanal verlaufen. Auf diese Weise kann dort eine Strömungsrichtung des Fluids definiert werden.

Wenigstens ein Diffusor-Einlasskanal kann wenigstens abschnittsweise einen runden Querschnitt aufweisen. Ein runder Querschnitt ist bezüglich seiner Drehorientierung symmetrisch. So kann der wenigstens eine Diffusor-Einlasskanal in unterschiedlichen Drehorientierungen an dem Fluidauslass des Filtergehäuses angeordnet werden. So kann die Orientierung der wenigstens einen Diffusoreinrichtung, insbesondere die Austrittsrichtung des filtrierten Fluids aus der wenigstens einen Diffusoreinrichtung, flexibler eingestellt werden.

Der Diffusor-Einlasskanal kann wenigstens abschnittsweise einen konstanten Querschnitt aufweisen. Auf diese Weise kann in dem Diffusor-Einlasskanal eine gleichmäßige Fluidströmung erreicht werden.

Vorteilhafterweise kann eine Diffusoreinrichtung einen axialen, rohrförmigen Diffusor-Einlasskanal mit einer Einlassöffnung umfassen, die so konfiguriert ist, dass sie an einer Auslassöffnung eines Filters, insbesondere eine Fluidauslassöffnung, angebracht werden kann. Vorteilhafterweise kann der Einlasskanal eine Einlassströmungsrichtung, insbesondere eine Diffusor-Hauptstromachse, entlang der axialen Richtung von der Einlassöffnung durch den Einlasskanal definieren. Vorteilhafterweise kann die Diffusoreinrichtung mindestens einen Diffusorkanal, insbesondere einen Fluidleitkanal, umfassen, der mit dem Diffusor-Einlasskanal stromabwärts der Einlassöffnung verbunden ist. Vorteilhafterweise kann der Diffusorkanal so konfiguriert sein, dass er Fluid, insbesondere Flüssigkeit, in einen Tank abgibt. Vorteilhafterweise kann sich der Diffusorkanal vom Einlasskanal in einem spitzen Winkel erstrecken, so dass Fluid, insbesondere Flüssigkeit, dass vom Einlasskanal in den Diffusorkanal eintritt, eine Richtungsänderung von mehr als 90 Grad, vorzugsweise von mehr als 130 Grad, vorzugsweise von weniger als 170 Grad, erfährt.

Vorteilhafterweise kann die Diffusoreinrichtung eine Mehrzahl von Diffusorkanälen umfassen.

Vorteilhafterweise kann die Diffusoreinrichtung eine Vielzahl von parallelen Diffusorkanälen umfassen.

Vorteilhafterweise kann die Mehrzahl von Diffusorkanälen eine erste Mehrzahl von parallelen Diffusorkanälen und eine zweite Mehrzahl von Diffusorkanälen sein. Die zweite Mehrzahl von Diffusorkanälen kann sich in einer Richtung erstrecken, die der Richtung der ersten Mehrzahl von Diffusorkanälen entgegengesetzt ist. Vorteilhafterweise kann eine Konfiguration erzeugt werden, die eine Symmetrieebene entlang der axialen Achse des Einlasskanals aufweisen kann.

Vorteilhafterweise kann die Diffusoreinrichtung als einteiliges Bauteil unter Verwendung von thermoplastischem Material, ausgewählt aus der Gruppe Polyamid, Polyester, Polypropylen oder einem anderen thermoplastischen Material, geformt in einem Spritzgießverfahren hergestellt sein.

Darüber hinaus wird die Aufgabe erfindungsgemäß bei der Diffusoreinrichtung dadurch gelöst, dass die wenigstens eine Diffusoreinrichtung mehrere Fluidleitflächen aufweist.

Im Übrigen gelten die im Zusammenhang mit dem erfindungsgemäßen Filter, der erfindungsgemäßen Bypass-Ventilanordnung, dem erfindungsgemäßen Filterelement und der erfindungsgemäßen Diffusoreinrichtung und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: einen Längsschnitt eines Tanks für Flüssigkeit, in dem ein Filter gemäß einem ersten Ausführungsbeispiel mit einer Bypass-Ventilanordnung gemäß einem ersten Ausführungsbeispiel und einer Diffusoreinrichtung gemäß einem ersten Ausführungsbeispiel angeordnet ist;
- Figur 2: einen Längsschnitt des Filters aus der Figur 1;
- Figur 3: eine isometrische Ansicht des Filters aus den Figuren 1 und 2;
- Figur 4: eine isometrische Detailansicht der Diffusoreinrichtung des Filters aus den Figuren 1 bis 3;
- Figur 5: einen Längsschnitt der Diffusoreinrichtung des Filters aus den Figuren 1 bis 3;
- Figur 6: eine Detailansicht des Längsschnitts des Filters aus der Figur 2 im Bereich der Anbindung der Bypass-Ventilanordnung in einer oberen Endkappe eines Filterelements des Filters;
- Figur 7: eine isometrische Ansicht der Bypass-Ventilanordnung gemäß dem ersten Ausführungsbeispiel des Filters aus den Figuren 1 bis 3;
- Figur 8: einen Längsschnitt der Bypass-Ventilanordnung gemäß dem ersten Ausführungsbeispiel des Filters aus den Figuren 1 bis 3;
- Figur 9: eine isometrische Darstellung einer Filteranordnung mit zwei Filtern gemäß dem ersten Ausführungsbeispiel aus den Figuren 1 bis 3;
- Figur 10: eine isometrische Darstellung einer Filteranordnung mit zwei Filtern gemäß einem zweiten Ausführungsbeispiel;
- Figur 11: einen Längsschnitt der Filteranordnung aus Figur 10;
- Figur 12: eine isometrische Darstellung einer Bypass-Ventilanordnung gemäß einem zweiten Ausführungsbeispiel;
- Figur 13: einen Längsschnitt der Bypass-Ventilanordnung gemäß dem zweiten Ausführungsbeispiel aus Figur 12;
- Figur 14: eine isometrische Darstellung eine Diffusoreinrichtung gemäß am zweiten Ausführungsbeispiel;
- Figur 15: einen Längsschnitt der Diffusoreinrichtung gemäß den zweiten Ausführungsbeispiel aus der Figur 14;
- Figur 16: einen Querschnitt der Diffusoreinrichtung gemäß dem zweiten Ausführungsbeispiel aus den Figuren 14 und 15 entlang einer Schnittlinie XVI-XVI aus der Figur 15.

In den Figuren sind gleiche Bauteile mit gleichen Bezugszeichen versehen.

### Ausführungsform(en) der Erfindung

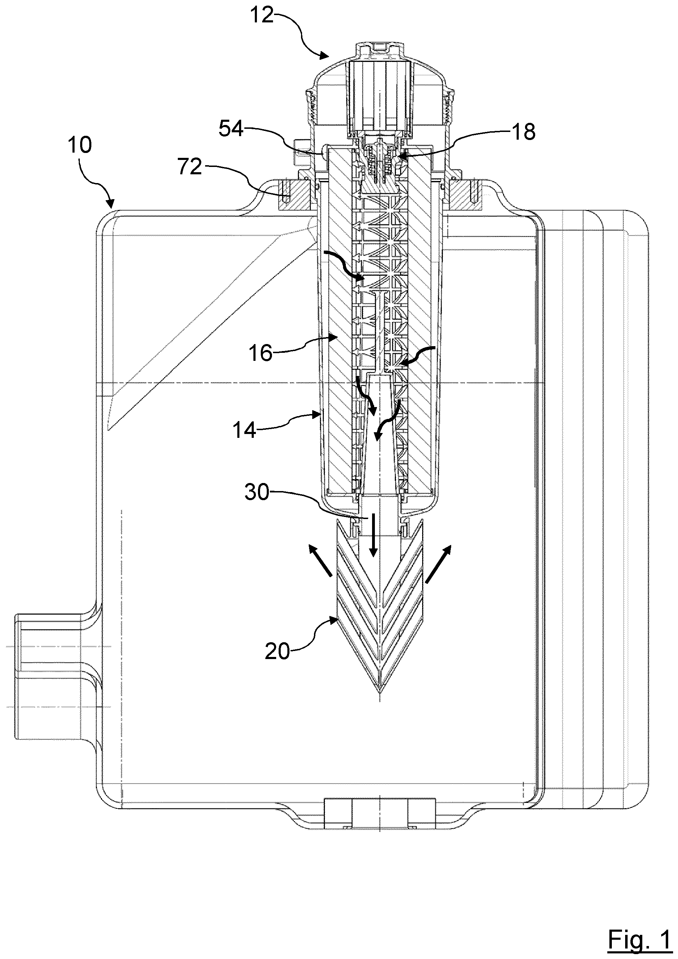

In der Figur 1 ist ein Tank 10 für Flüssigkeit, beispielsweise Kraftstoff, Öl, Hydrauliköl, Harnstoff-Wasser-Lösung oder dergleichen, gezeigt. In dem Tank 10 ist ein Filter 12 in Form eines Flüssigkeitsfilters als sogenannter In-Tank-Filter gemäß einem ersten Ausführungsbeispiel angeordnet. Der Filter 12 ist in eine obere Wand des Tanks 10 eingesteckt und erstreckt sich in den Innenraum des Tanks 10. Außerhalb des Tanks 10 ist der Filter 12 von außen zugänglich.

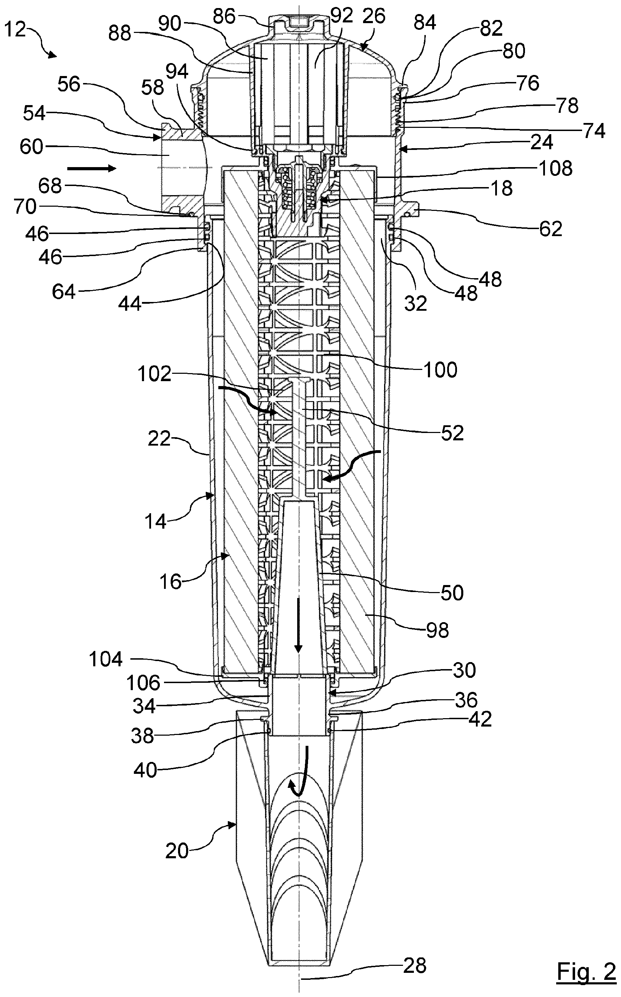

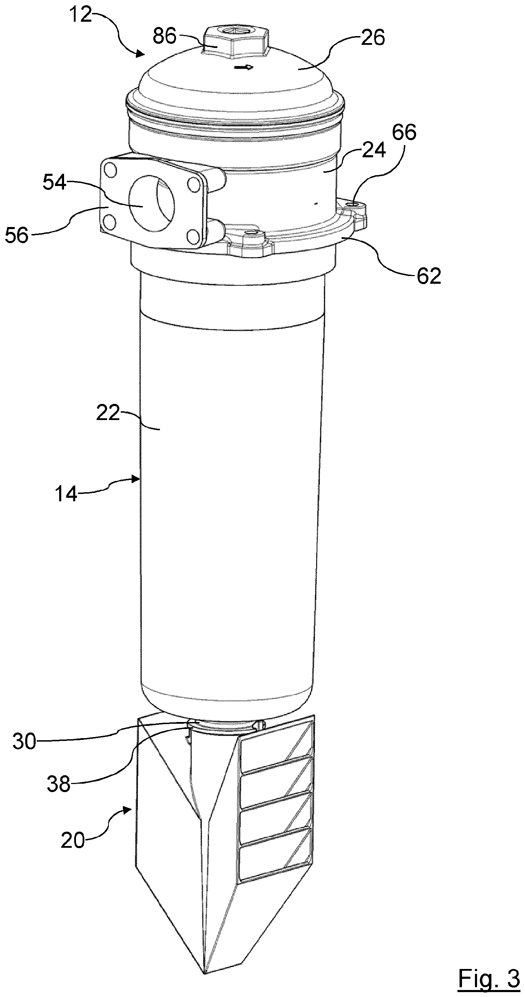

Der Filter 12 und seine Komponenten sind in den Figuren 2 bis 8 in unterschiedlichen Perspektiven, Schnitten und Detaildarstellungen gezeigt.

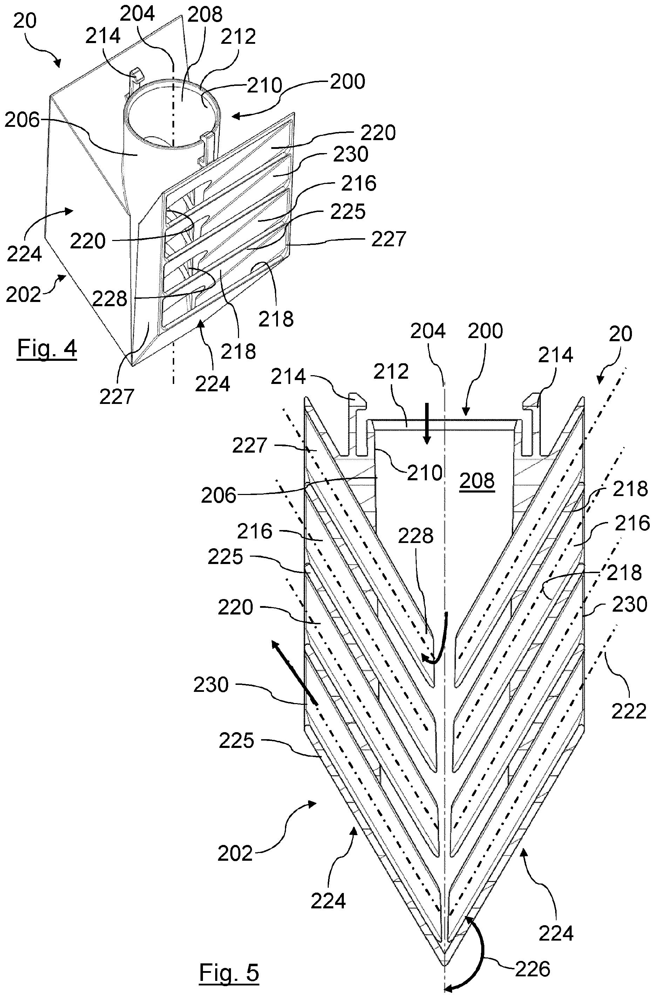

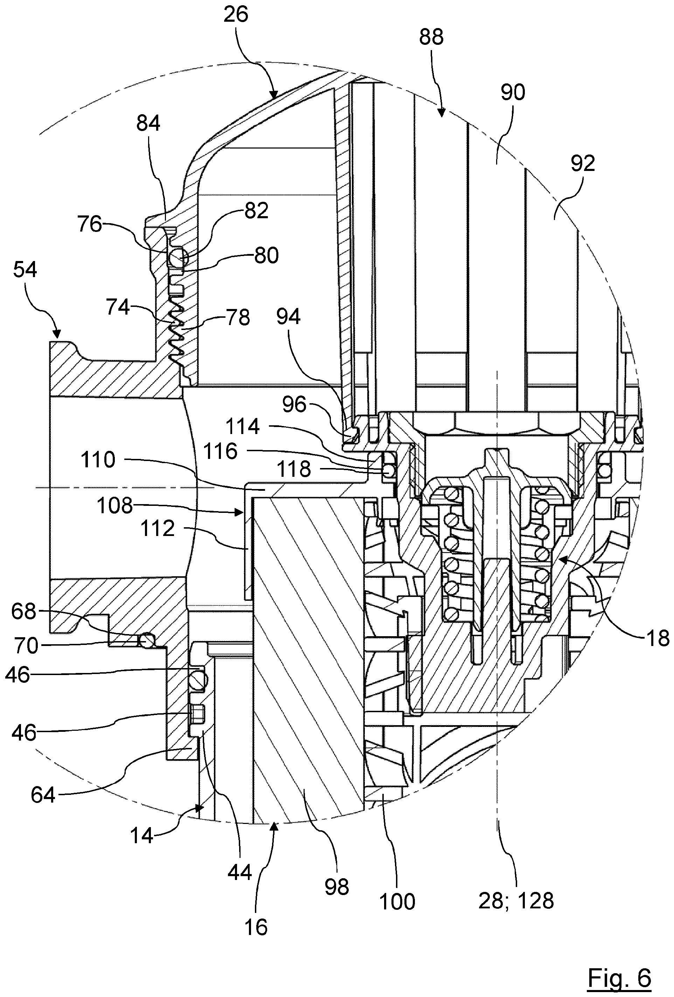

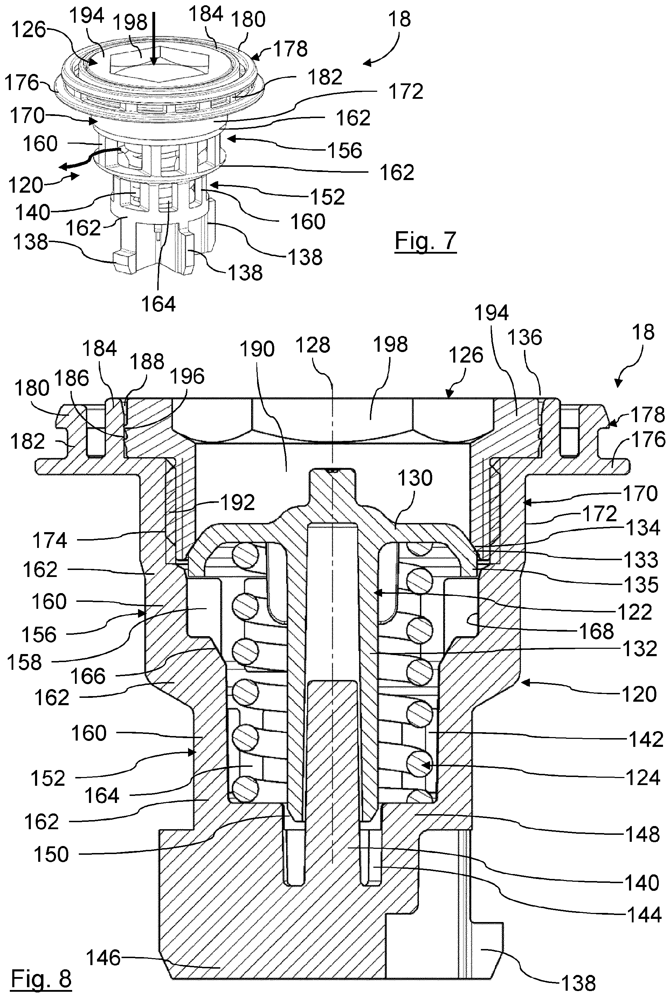

Der Filter 12 umfasst ein Filtergehäuse 14, in dem ein Filterelement 16 und eine Bypass-Ventilanordnung 18 gemäß einem ersten Ausführungsbeispiel angeordnet sind. Ferner umfasst der Filter 12 eine Diffusoreinrichtung 20 im ersten Ausführungsbeispiel. Die Diffusoreinrichtung 20 ist in den Figuren 4 und 5 im Detail gezeigt. Die Bypass-Ventilanordnung 18 ist im Detail in den Figuren 7 und 8 gezeigt. Die Anbindung der Bypass-Ventilanordnung 18 an das Filterelement 16 ist im Detail in der Figur 6 gezeigt.

Das Filtergehäuse 14 umfasst einen Gehäusetopf 22, in den Figuren 1 bis 3 unten, ein Gehäuseanschlussteil 24 in der Mitte und einen Gehäusedeckel 26 oben. Der Gehäusetopf 22 hat etwa die Form eines zu einer gedachten Filterachse 28 koaxialen, hohlen Kreiszylinders.

Die Filterachse 28 fällt in dem Ausführungsbeispiel zusammen mit einer Ventilachse 128 der Bypass-Ventilanordnung 18 und einer Diffusor-Hauptstromachse 204 der Diffusoreinrichtung 20. Wenn im Folgenden von "radial", "koaxial", "axial", "tangential", "umfangsmä-βig", "konzentrisch", "exzentrisch" oder dergleichen die Rede ist, so bezieht sich dies, sofern nicht anders erwähnt, auf die dem Kontext entsprechende Achse.

Auf einer axialen Stirnseite, in den Figuren 1 bis 3 unten, weist der Gehäusetopf 22 einen Bodenabschnitt auf, in welchem sich ein beispielhaft ein koaxialer Fluidauslass 30 befindet. Auf der gegenüberliegenden axialen Stirnseite, oben, weist der Gehäusetopf 22 eine Einbauöffnung 32 für das Filterelement 16 auf.

Der Fluidauslass 30 umfasst einen beispielhaft kreiszylindrischen koaxialen Auslassstutzen 34 auf, welcher innen hohl ist. Der Auslassstutzen 34 hat einen kleineren Durchmesser als der Gehäusetopf 22. Der Auslassstutzen 34 erstreckt sich in axialer Richtung durch den Boden des Gehäusetopfs 22. Der Auslassstutzen 34 erstreckt sich axial betrachtet etwa hälftig in dem Innenraum des Gehäusetopfs 22 und außerhalb des Gehäusetopfs 22.

Der Teil des Auslassstutzens 34, welcher sich außerhalb des Gehäusetopfs 22 befindet, ist als Anschlussteil 36 für die Diffusoreinrichtung 20 ausgestaltet. Das Anschlussteil 36 umfasst einen umlaufenden Rastkragen 38. Vom Rastkragen 38 aus zu dem freien Ende des Anschlussteils 36 hin betrachtet, verjüngt sich der Außendurchmesser des Anschlussteils 36 konisch. Vor dem freien Ende des Anschlussteils 36 erstreckt sich eine Dichtungsaufnahme 40 umfangsmäßig zusammenhängend. In der Dichtungsaufnahme 40 ist ein Dichtungsring 42 angeordnet. Der Dichtungsring 42 ist in radialer Richtung dichtend wirkend.

Die Einbauöffnung 32 des Gehäusetopfs 22 erstreckt sich radial über den gesamten Innenquerschnitt des Gehäusetopfs 22. Im Bereich des stirnseitigen Rands, welcher die Einbauöffnung 32 umgibt, weist der Gehäusetopf 22 einen Absatz 44 auf. Der Absatz 44 erstreckt sich an der radial äußeren Umfangsseite umfangsmäßig und nach radial außen. In der radialäußeren Umfangsseite des Absatzes 44 sind zwei Dichtungsaufnahmen 46 angeordnet. Die Dichtungsaufnahmen 46 erstrecken sich jeweils umfangsmäßig zusammenhängend. In axialer Richtung betrachtet, sind die Dichtungsaufnahmen 46 nebeneinander angeordnet. In jeder Dichtungsaufnahme 46 ist ein Dichtungsring 48 angeordnet. Die Dichtungsringe 48 sind jeweils in radialer Richtung dichtend wirkend.

Auf dem Ende des Auslassstutzens 34, welches sich im Innenraum des Gehäusetopfs 22 befindet, ist ein beispielhaft koaxiales Mittelrohr 50 aufgesetzt. Das Mittelrohr 50 verjüngt sich von dem Auslassstutzen 34 aus zu seinem freien Ende hin betrachtet. An seinem freien Ende weist das Mittelrohr 50 einen koaxialen stabförmigen Aufsatz 52 auf. Die Umfangswand des Mittelrohrs 50 ist für Fluid durchlässig. Das Mittelrohr 50 ist beispielhaft mit einem Ende in den Auslassstutzen 34 eingesteckt.

Das Gehäuseanschlussteil 24 weist etwa die Form eines hohlen Kreiszylinders auf, welcher an beiden axialen Enden offen ist. Das Gehäuseanschlussteil 24 ist koaxial zur Filterachse 28. Das Gehäuseanschlussteil 24 verfügt über einen Fluideinlass 54 und einen Montageflansch 56. Der Fluideinlass 54 umfasst einen Einlassstutzen 58, welcher einen Einlasskanal 60 umgibt. Der Einlassstutzen 48 erstreckt sich auf einer Umfangsseite des Gehäuseanschlussteils 24 nach radial außen. An dem freien Ende des Einlassstutzens 58 ist ein Anschlussflansch 62 angeordnet. Der Anschlussflansch 62 weist beispielhaft vier Schrauböffnungen auf, an welchen ein entsprechender Rohrleitungsstutzen einer nicht gezeigten Fluidzuleitung lösbar befestigt werden kann. Das Gehäuseanschlussteil 24 ist einschlägig mit dem Montageflansche 56 und dem Einlassstutzen 58 realisiert.

Das Gehäuseanschlussteil 24 weist an einem axial stirnseitigen Rand, in den Figuren 1 bis 3 unten, welcher im montierten Zustand dem Gehäusetopf 22 zugewandt ist, an der radial inneren Umfangsseite einen Anschlagsteg 64 auf. Der Anschlagsteg 64 erstreckt sich nach radial innen. Ein Innendurchmesser im Bereich des Anschlagstegs 64 ist kleiner als ein Außendurchmesser des Absatzes 44 des Gehäusetopfs 22. Außerdem ist der Innendurchmesser des Anschlagstegs 64 größer als der Außendurchmesser des Gehäusetopfs 22 außerhalb des Absatzes 44. Der Innendurchmesser des Gehäuseanschlussteils 24 in axialer Richtung neben dem Anschlagsteg 64 ist etwas größer als der Außendurchmesser des Absatzes 44 des Gehäusetopfs 22.

Zur Montage kann der Gehäusetopf 22 mit seinem unteren, den Fluidauslass 30 aufweisenden Ende voran in axialer Richtung durch die Öffnung an dem dem Anschlagsteg 64 axial abgewandten Ende des Gehäuseteils 24 gesteckt werden. In montiertem Zustand liegt der Anschlagsteg 64, wie in der Figur 2 und 6 gezeigt, in axialer Richtung an dem Absatz 44 an. Die Dichtungsringe 48 liegen radial dichtend an der radial inneren Umfangsseite des Gehäuseanschlussteils 24 an, welche als Dichtfläche wirkt.

Der Montageflansch 56 des Gehäuseanschlussteils 24 befindet sich zwischen dem Einlassstutzen 58 und dem freien Rand mit dem Anschlagsteg 64. Der Montageflansch 56 erstreckt sich umfangsmäßig an der radial äußeren Umfangsseite des Gehäuseanschlussteils 24. Der Montageflansch 56 weist umfangsmäßig verteilt beispielhaft vier Schraublöcher 66 auf. Die Achsen der Schraublöcher 66 verlaufen parallel zur Filterachse 28. Auf seiner dem Rand des Gehäuseanschlussteils 24 mit dem Anschlagsteg 64 zugewandten axialen Stirnseite weist der Montageflansch 56 eine Dichtungsaufnahme 68 auf. In der Dichtungsaufnahme 68 ist ein Dichtungsring 70 angeordnet.

Bei dem in Tank 10 montierten Filter 12 liegt der Montageflansch 56 auf einem entsprechenden Tank-Montageabschnitt 72 des Tanks 10 auf. Der Montageflansch 56 ist mit vier Schrauben mit dem Tank-Montageabschnitt 72 verschraubt. Der Dichtungsring 70 liegt, in axialer Richtung dichtend wirkend, auf einer entsprechenden Dichtungsfläche des Tank-Montageabschnitts 72 auf.

Zwischen dem Einlassstutzen 58 und dem freien Rand, welcher dem Anschlagsteg 68 axial gegenüberliegt, weist das Gehäuseanschlussteil 24 an der radial inneren Umfangsseite ein Innengewinde 74 auf. Zwischen dem Innengewinde 74 und dem freien Rand auf der axialen Stirnseite des Gehäuseanschlussteils 24 ist die radial innere Umfangsseite des Gehäuseanschlussteils 24 als Dichtungsfläche 76 ausgestaltet. Zum axial freien Rand hin weitet sich die Dichtungsfläche etwa trichterförmig auf und bildet so eine Einführschräge für den Gehäusedeckel 26.

Der Gehäusedeckel 26 weist eine koaxiale, kreiszylindrische Umfangswand auf. Auf einer axialen Stirnseite, welche in montiertem Zustand dem Gehäusetopf 22 zugewandt ist, ist der Gehäusetopf 22 offen. Auf der axial gegenüberliegenden Stirnseite ist der Gehäusetopf 22 geschlossen.

Axial neben seinem offenen Rand weist der Gehäusedeckel 26 an seiner radial äußeren Umfangsseite ein Außengewinde 78 auf. Das Außengewinde 78 passt zu dem Innengewinde 74 des Gehäuseanschlussteils 24. In montiertem Zustand ist das Außengewinde 78 in das Innengewinde 74 eingeschraubt.

Auf der dem freien Rand axial gegenüberliegenden Seite ist neben dem Außengewinde 78 in der radial äußeren Umfangsseite des Gehäusedeckels 26 eine umfangsmäßig zusammenhängende Dichtungsaufnahme 80 angeordnet. In der Dichtungsaufnahme 80 ist ein Dichtungsring 82 angeordnet. Bei montiertem Gehäusedeckel 26 liegt der Dichtungsring 82, in radialer Richtung dichtend wirkend, an der Dichtungsfläche 76 des Gehäuseanschlussteils 24 an.

Auf der dem Außengewinde 78 axial gegenüberliegenden Seite der Dichtungsaufnahme 80 ist ein Anschlagsteg 84 realisiert. Der Anschlagsteg 84 erstreckt sich an der radial äußeren Umfangsseite des Gehäusedeckels 26 nach radial außen. In montiertem Zustand des Gehäusedeckels 26 liegt der freie Rand des Gehäuseanschlussteils 24 an dem Anschlagsteg 84 an. So kann verhindert werden, dass der Gehäusedeckel 26 zu weit in das Gehäuseanschlussteil 24 geschraubt wird.

Auf seiner geschlossenen Seite ist der Gehäusedeckel 26 außen mit einem Angreifelement 86 versehen. Das Angreifelement 86 ist beispielhaft in Form eines Sechskants ausgestaltet und koaxial zur Filterachse 28. An das Angreifelement 86 kann beispielsweise ein Werkzeug, beispielsweise ein Schraubenschlüssel, angesetzt werden, um den Gehäusedeckel 26 in das Gehäuseanschlussteil 24 zu schrauben oder aus diesem heraus zu schrauben.

Im Inneren des Gehäusedeckels 26 ist ein koaxialer Haltekorb 88 angeordnet. Der Haltekorb 88 hat etwa die Form eines koaxialen hohlen Kreiszylinders. Der Haltekorb 88 ist einstückig mit der geschlossenen Seite des Gehäusedeckels 26 verbunden.

Der Haltekorb 88 umfasst am freien Ende eine koaxiale umfangsmäßig zusammenhängende Ringstrebe 94 und eine Mehrzahl von Korbstreben 90. Die Korbstreben 90 erstrecken sich jeweils etwa parallel zur Filterachse 28 zwischen der Ringstrebe 94 und der geschlossenen Seite des Gehäusedeckels 26. Zwischen den Korbstreben 90 sind Durchlassöffnungen 92 für Fluid realisiert.

Die radial innere Umfangsseite der Ringstrebe 94 bildet einen umfangsmäßig zusammenhängenden Rastvorsprung 96. Auf ihrer dem Gehäusetopf 22 axial zugewandten Seite weist der Rastvorsprung 96 eine Einführschräge für eine Gehäuse-Befestigungselement 178 der Bypass-Ventilanordnung 18 auf. Der Haltekorb 88 überragt in axialer Richtung den freien Rand der Umfangswand des Gehäuseanschlussteils 24.

Das Filterelement 16 ist beispielhaft als Rundfilterelement ausgestaltet. Das Filterelement 16 verfügt über ein Filtermedium 98, beispielhaft in Form von Filtervlies oder dergleichen, welches einen koaxialen Stützkorb 100 koaxial umgibt. Das Filtermedium 98 und der Stützkorb 100 umgeben ein Elementinnenraum 102 des Filterelements 16.

Auf einer dem Fluidauslass 30 axial zugewandten Stirnseite weist das Filterelement 16 eine auslassseitige Endkappe 104 auf. Die auslassseitige Endkappe 104 erstreckt sich in radialer Richtung über die axiale Stirnseite des Filtermediums 98. Im Zentrum weist die auslassseitige Endkappe 104 eine Durchstecköffnung auf. Durch die Durchstecköffnung ragen das Mittelrohr 50 und der innere Teil des Anschlussstutzens 34 in den Elementinnenraum 102.

An der radial äußeren Umfangsseite weist die Endkappe 104 einen sich in axialer Richtung und in Umfangsrichtung erstreckenden Wandabschnitt auf, der das Filtermedium 98 umgreift. An der radial inneren Umfangsseite ist die auslassseitige Endkappe 104 zu einer Dichtungsaufnahme gestuft, in der ein Dichtungsring 106 beispielsweise aus Elastomer angeordnet ist. Der Dichtungsring 106 liegt bei eingebautem Filterelement 16 an der radial äußeren Umfangsseite des Auslassstutzens 34, welche eine Dichtfläche bildet, in radialer Richtung dichtend an.

Auf der dem Gehäusedeckel 26 axial zugewandten Stirnseite weist das Filterelement 16 eine einlassseitige Endkappe 108 auf. Die einlassseitige Endkappe 108 verfügt über einen flachen, sich in radialer Richtung erstreckenden Basisabschnitt 110 und einen vom radial äußeren Rand des Basisabschnitts 110 in Richtung der auslassseitigen Endkappe 104 abstehenden, radial äußeren, zylindrischen Strömungsschutzabschnitt 112. Die axiale Länge des Strömungsschutzabschnitts 112 ist so gestaltet, dass das Filtermedium 98 vor einer durch den Fluideinlass 54 in das Filtergehäuse 14 eintretenden, radialen Direktströmung von Fluid geschützt ist.

Die einlassseitige Endkappe 108 weist einen der radial inneren Umfangsseite einen koaxialen Dichtungs-Zylinderabschnitt 114 auf. Der Dichtungs-Zylinderabschnitt 114 erstreckt sich in axialer Richtung von dem Strömungsabschnitt 112 weg. In seiner radial inneren Umfangsseite weist der Dichtungs-Zylinderabschnitt 114 eine Dichtungsaufnahme 116 auf, in der ein Dichtungsring 118 beispielsweise in Form eines O-Rings angeordnet ist. Der Dichtungsring 118 kann beispielhaft aus Elastomer sein. Zusätzlich oder alternativ zu dem Dichtungsring 118 kann die Dichtung auch durch das Material der Endkappe 108 bereitgestellt werden. Es kann auch eine in axialer Richtung oder axialer und radialer Richtung dichtend wirkende Dichtung vorgesehen sein.

Die Bypass-Ventilanordnung 18 gemäß dem ersten Ausführungsbeispiel ist im Detail in den Figuren 7 und 8 gezeigt. Die Bypass-Ventilanordnung 18 umfasst ein Ventilgehäuse 120, einen Ventil-Verschlusskörper 122, ein Ventil-Rückstellelement 124 beispielhaft in Form einer koaxialen Schraubendruckfeder und ein Ventilsitzelement 126.

Der Ventil-Verschlusskörper 122 ist axial zu der Ventilachse 128 bewegbar in dem Ventilgehäuse 120 angeordnet. Der Ventil-Verschlusskörper 122 weist einen Ventilteller 130 und eine Ventilstange 132 auf. Der Ventilteller 130 und die Ventilstange 132 sind beispielhaft einteilig ausgestaltet.

Die Ventilstange 132 hat die Form eines hohlen Kreiszylinders.

Der Ventilteller 130 ist an einem axialen Ende der Ventilstange 132 angeordnet und verschließt dort den Innenraum der Ventilstange 132. Der Ventilteller 130 ist an seinem radial äußeren Rand zu dem freien Ende der Ventilstange 132 hin gebogen. Die so gebildete radial äußere Umfangsseite des Ventiltellers 130 hat einen koaxial kreiszylindrischen Verlauf und bildet einen Führungsabschnitt 135. Der Innenraum der Ventilstange 132 ist an dem freien Ende offen.

Der gebogene Rand des Ventiltellers 130 bildet im Bereich der Biegung eine Ventilsitz-Anlagefläche 133. Die Ventilsitz-Anlagefläche 133 liegt in der Schließstellung, die in den Figuren 1, 2 und 6 bis 8 gezeigt ist, an einem Ventilsitz 134 des Ventilsitzelements 126 dicht an. Der Ventilteller 130 und der Ventilsitz 134 haben jeweils eine insgesamt bezüglich der Ventilachse 128 rotationssymmetrische Form.

Der Ventilteller 130 weist an seiner axialen Außenseite einen koaxialen Dom. Der Außendurchmesser des Doms entspricht etwa dem Innendurchmesser des Innenraums der Ventilstange 132.

Das Ventilgehäuse 120 ist als Ventilkorb oder Ventilkäfig ausgestaltet. Das Ventilgehäuse 120 weist eine koaxiale Umfangswand auf. Die Umfangswand weist eine Vielzahl von Durchflussöffnungen 164 für Fluid auf. Die Umfangswand ist in axialer Richtung mehrfach abgestuft. Auf einer in den Figuren 7 und 8 axial oberen Seite weist das Ventilgehäuse 120 eine Einbauöffnung 136 für das Ventilsitzelement 126 auf. Auf der axial unteren Seite ist das Ventilgehäuse 120 mit einem Bodenabschnitt 146 verschlossen.

Auf der dem Bodenabschnitt 146 zugewandten Seite weist das Ventilgehäuse 120 an der radial äußeren Umfangsseite mehrere Flügel 138 auf, die sich jeweils nach radial außen erstrecken. Die Flügel 138 sind einstückig mit dem Bodenabschnitt 146 verbunden. Die Flügel 138 schließen jeweils mit einer axialen Stirnseite auf gleicher Höhe mit der Unterseite des Bodenabschnitts 146 ab. Die der Unterseite des Bodenabschnitts 146 axial abgewandten Stirnseiten der Flügel 138 befinden sich in axialer Richtung betrachtet auf axial unterschiedlichen Höhen. Die der Unterseite des Bodenabschnitts 146 axial abgewandten Stirnseiten der Flügel 138 erstrecken sich entlang einer koaxialen, gedachten Schraubenlinie. Die Flügel 138 können beispielsweise mit entsprechenden Teilen des Stützkorbs 100 des Filterelements 16 zu einer bajonettverschlussartigen Verbindung zusammengebracht werden.

Im Innenraum des Ventilgehäuses 120 erstreckt sich ein Führungszylinder 140 vom Bodenabschnitt 146 koaxial in einen koaxialen Aufnahmeraum 142 für das Ventil-Rückstellelement 124. Der Führungszylinder 140 ist einstückig mit dem Bodenabschnitt 146 verbunden.

Auf der dem Innenraum des Ventilgehäuses 120 zugewandten Seite des Bodenabschnitts 146 ist eine umfangsmäßig zusammenhängende, koaxiale Führungs-Ringnut 144 angeordnet. Die Führungs-Ringnut 144 umgibt den Führungszylinder 140.

Die Ventilstange 132 des Ventil-Verschlusskörpers 122 steckt in axialer Richtung beweglich auf dem Führungszylinder 140. Der Führungszylinder 140 und die Führungs-Ringnut 144 führen die Ventilstange 132 bei deren Axialbewegung.

Die Ventilstange 132 weist an ihrem offenen Ende radial außen eine Führungsschräge 150 auf. Mithilfe der Führungsschräge 150 kann die Ventilstange 132 bei ihrer Axialbewegung einfacher in die Führungsringnut 144 eingeführt werden.

Radial außerhalb der Führungsringnut 144 bildet der Bodenabschnitt 146 einen Stützabschnitt 148, der sich in radialer Richtung und umfangsmäßig erstreckt. An dem Stützabschnitt 148 stützt sich das Ventil-Rückstellelement 124, nämlich die Schraubenfeder, mit einem Ende ab. Mit dem anderen Ende stützt sich das Ventil-Rückstellelement 124 an der Unterseite des Ventiltellers 130 ab. Das Ventil-Rückstellelement 124 wirkt auf den Ventilteller 130 und drückt den Ventilteller 130 gegen den Ventilsitz 134.

Der Bodenabschnitt 146 geht einstückig in einen umfangsmäßigen Aufnahme-Wandabschnitt 152 über. Der Aufnahme-Wandabschnitt 152 umgibt koaxial den Aufnahmeraum 142 für den unteren Teil des Ventil-Rückstellelements 124, welcher dem Bodenabschnitt 146 zugewandt ist. Der Innendurchmesser des Aufnahmeraums 142 ist etwas größer als der Außendurchmesser des Ventil-Rückstellelements 124.

Hinter einer Stufe nach radial außen geht der Aufnahme-Wandabschnitt 152 einstückig in einen umfangsmäßigen Führungsraum-Wandabschnitt 156 über. Der Führungsraum-Wandabschnitt 156 umgibt einen koaxialen Führungsraum 158 für den Ventilteller 130.

Der Aufnahme-Wandabschnitt 152 und der Führungsraum-Wandabschnitt 156 sind jeweils durch sich axial erstreckende Wandstreben 160 realisiert. Die Wandstreben 160 erstrecken sich zwischen jeweils zwei koaxialen Ringabschnitten 162, welche in axialer Richtung beabstandet sind. Der mittlere Ringabschnitt 162 befindet sich auf Höhe der Stufe zwischen dem Aufnahme-Wandabschnitt 152 und dem Führungsraum-Wandabschnitt 156. Zwischen den Wandstreben 160 sind jeweils durchgängige Durchflussöffnungen 164 für Fluid realisiert. Der Aufnahme-Wandabschnitt 152 und der Führungsraum-Wandabschnitt 156 sind für Fluid durchlässig.

Im Bereich des mittleren Ringabschnitts 162 überlappen sich die Wandstreben 160 des Aufnahme-Wandabschnitts 152 und die Wandstreben 160 des Führungsraum-Wandabschnitts 156 in axialer Richtung.

Die Wandstreben 160 des Aufnahme-Wandabschnitts 152 weisen an ihrem dem Bodenabschnitt 146 abgewandten Ende auf der radial inneren Umfangsseite jeweils eine Einführschräge 166 auf. Die Einführschrägen 166 erleichtern den Einbau des Ventil-Rückstellelements 124.

Oberhalb der Wandstreben 160 des Aufnahme-Wandabschnitts 152 verlaufen die radial inneren Umfangsseiten der Wandstreben 160 des Führungsraum-Wandabschnitts 156 in axialer Richtung. Die radial inneren Umfangsseiten der Wandstreben 160 des Führungsraum-Wandabschnitt 156 bilden radial äußere Führungsflächen 168. An der Führungsfläche 168 wird der Führungsabschnitt 135 des Ventiltellers 130 bei einer Bewegung des Ventil-Verschlusskörpers 122 in axialer Richtung geführt.

Auf der dem Bodenabschnitt 146 axial abgewandten Seite geht der obere Ringabschnitt 162 des Führungsraum-Wandabschnitts 156 einstückig in einen Schraub- und Dichtabschnitt 170 über.

Die radial äußere Umfangsseite des Schraub- und Dichtabschnitts 170 bildet eine Dichtungsfläche 172. Die Dichtungsfläche 172 hat die Form eines koaxialen Kreiszylindermantels. Bei eingebauter Bypass-Ventilanordnung 18 liegen die Dichtungsringe 118 der einlassseitigen Endkappe 108 des Filterelements 16 in radialer Richtung dichtend an der Dichtungsfläche 172 an.

Die radial innere Umfangsseite des Schraub- und Dichtabschnitts 170 weist ein koaxiales Ventilgehäuse-Gewinde 174 in Form eines Innengewindes auf.

Auf der dem Bodenabschnitt 146 axial abgewandten Seite geht der Schraub- und Dichtabschnitt 170 einstückig in einen Befestigungsflansch 176 über, der sich umfangsmäßig und nach radial außen erstreckt.

Der Befestigungsflansch 176 weist auf seiner dem Bodenabschnitt 146 axial abgewandten Seite ein einstückiges Gehäuse-Befestigungselement 178 auf. Das Gehäuse-Befestigungselement 178 umfasst einen koaxialen, umfangsmäßig zusammenhängenden Rastring 180. Der Rastring 180 ist mit mehreren Befestigungsstege 182 einstückig mit dem Befestigungsflansch 176 verbunden. Die Befestigungsstege 182 erstrecken sich jeweils in axialer Richtung und sind umfangmäßig verteilt angeordnet. Beim montierten Filter 12 verrastet der Rastring 180 hinter dem Rastvorsprung 96 des Haltekorbs 88 des Gehäusedeckels 26. Mit dem Gehäuse-Befestigungselement 178 und dem Rastvorsprung 96 wird die Bypass-Ventilanordnung 18 an dem Gehäusedeckel 26 gehalten.

Radial innerhalb des Gehäuse-Befestigungselements 178 ist ein koaxialer Dichtzylinderabschnitt 184 angeordnet. Der Dichtzylinderabschnitt 184 ist einstückig mit der dem Bodenabschnitt 146 abgewandten Seite des Befestigungsflansches 176 verbunden. Die radial äußere Umfangsseite des Dichtzylinderabschnitts 184 ist zu der radial inneren Umfangsseite des Gehäuse-Befestigungselements 178 beabstandet. Der Innendurchmesser des Dichtzylinderabschnitts 184 ist größer als der Innendurchmesser des Schraub- und Dichtabschnitts 170. Die radial innere Umfangsseite des Dichtzylinderabschnitts 184 ist als Dichtfläche 186 ausgestaltet. An seinem dem Bodenabschnitt 146 axial abgewandten Rand weist der Dichtzylinderabschnitt 184 an der radial inneren Umfangsseite eine Einführschräge 188 auf. Die Einführschräge 188 erleichtert den Einbau des Ventilsitzelements 126 in das Ventilgehäuse 120.

Das Ventilsitzelement 126 hat insgesamt die Form eines abgestuften, hohlen Kreiszylinders, welcher koaxial angeordnet ist. Auf der dem Bodenabschnitt 146 des Ventilgehäuses 120 axial zugewandten Seite weist das Ventilsitzelement 126 einen koaxialen, sich umfangsmäßig und axial erstreckenden Gewinde-Wandabschnitt 190 auf. Der Gewinde-Wandabschnitt 190 weist an seiner radial äußeren Umfangsseite ein Ventilsitzelement-Gewinde 192 in Form eines Außengewindes auf. Das Ventilsitzelement-Gewinde 192 ist montiertem Zustand in das Ventilgehäuse-Gewinde 174 eingeschraubten bildet mit diesem eine Schraubverbindung. Die Schraubverbindung kann mittels einer Relativdrehung zwischen dem Ventilsitzelement 126 und dem Schraub- und Dichtabschnitt 170 des Ventilgehäuses 120 realisiert und in umgekehrter Drehrichtung getrennt werden.

Der freie Rand des Gewinde-Wandabschnitts 190, welcher dem Bodenabschnitt 146 zugewandt ist, ist auf der radial inneren Umfangsseite abgeschreckt und bildet dort den Ventilsitz 134.

Der Innendurchmesser des Gewinde-Wandabschnitts 190 ist kleiner als der Außendurchmesser des Ventiltellers 130. in dem in der Figur 8 dargestellten Schließzustand der Bypass-Ventilanordnung 18 die radial äußere Umfangsseite des Ventiltellers 130 unter der Federkraft des Ventil-Rückstellelements 124 dicht an dem Ventilsitz 134 an.

Hinter einer Stufe nach radial außen geht der Gewinde-Wandabschnitt 190 einstückig in einen Handhabungs- und Dichtungs-Wandabschnitt 194 über. Der der Handhabungs- und Dichtungs-Wandabschnitt 194 weist der radial äußeren Umfangsseite weist mehrere Dichtungsnoppen 196 auf, die sich umfangsmäßig zusammenhängend und radial nach außen erstrecken.

Der Außendurchmesser des Handhabungs- und Dichtungs-Wandabschnitts 194 ist etwas kleiner als der Innendurchmesser des Dichtzylinder-Wandabschnitts 184 des Ventilgehäuses 120. Bei montiertem Ventilsitzelement 126 liegen die Dichtungsnoppen 196, in radialer Richtung dichtend, an der radial inneren Umfangsseite des Dichtzylinder-Wandabschnitts 184.

Die radial innere Umfangsseite des Handhabungs- und Dichtungs-Wandabschnitts 194 ist als Handhabungselement 198 ausgebildet. Das Handhabungselement 198 weist beispielhaft die Form einer Innensechskantöffnung auf. Mit einem entsprechenden Werkzeug, beispielsweise einem Innensechskantschlüssel, kann in das Handhabungselement 198 eingegriffen werden. Durch handhaben mit dem Werkzeug kann das Ventilsitzelement 126 in den Schraub- und Dichtabschnitt 170 des Ventilgehäuses 120 eingeschraubt oder aus diesem ausgeschraubt werden. Ferner kann die vormontierte Bypass-Ventilanordnung 18 durch handhaben mit dem Werkzeug in die Einbauöffnung in der einlassseitigen Endkappe 108 eingebracht werden.

Bei montierter Bypass-Ventilanordnung 18 ist der Innenraum des Ventilsitzelements 126 fluidtechnisch über die Durchlassöffnungen 92 des Haltekorbs 88 mit dem Fluideinlass 54 verbunden. Auf diese Weise liegt dort der Fluiddruck der Rohfluidseite des Filterelements 16 an. Der Innenraum des Ventilgehäuses 120 ist über die Durchlassöffnungen 164 mit dem Elementinnenraum 102 des Filterelements 16 verbunden. Im Innenraum des Ventilgehäuses 120 liegt der Fluiddruck der Reinfluidseite des Filterelements 16 an.

Im Falle, dass das Filterelement 16, respektive das Filtermedium 98, beispielsweise durch abgeschiedene Partikel, teilweise oder gänzlich blockiert wird, erhöht sich die Druckdifferenz zwischen der Rohfluidseite und der Reinfluidseite, also zwischen dem Innenraum des Ventilsitzelements 126 und dem Innenraum des Ventilgehäuses 120. Die Druckdifferenz bewirkt eine Öffnungskraft in axialer Richtung auf den Ventilteller 130. Sobald die Öffnungskraft die Federkraft des Ventil-Rückstellelements 124 überschreitet, wird die Bypass-Ventilanordnung 18 geöffnet. So kann Rohfluid direkt durch die Bypass-Ventilanordnung 18 in den Elementinnenraum 102 des Filterelements 16 und von dort zu dem Fluidauslass 30 gelangen. So kann bei blockiertem Filterelement 16 Fluid durch den Filter 12 gelangen.

Die Diffusoreinrichtung 20 gemäß dem ersten Ausführungsbeispiel ist in den Figuren 4 und 5 im Detail gezeigt. Die Diffusoreinrichtung 20 umfasst einen Diffusor-Anschlussabschnitt 200 und einen Fluidleitabschnitt 202. Der Diffusor-Anschlussabschnitt 200 umfasst einen bezüglich der Diffusor-Hauptstromachse 204 koaxial kreiszylindrischen Diffusor-Anschlussstutzen 206. Der Diffusor-Anschlussstutzen 206 umgibt einen Diffusor-Einlasskanal 208.

Die Diffusoreinrichtung 20 ist beispielhaft als einstückige Komponente unter Verwendung von thermoplastischem Material, beispielsweise aus einer Gruppe von Polyamid, Polyester, Polypropylen oder einem anderen thermoplastischen Material beispielsweise nach einem Spritzgussverfahren hergestellt.

Die Diffusor-Hauptstromachse 204 gibt die Haupteinströmrichtung des Fluids aus dem Fluidauslass 30 des Filterelements 16 in den Diffusor-Anschlussabschnitt 200 an.

An dem freien Ende des Anschlussstutzens 206, das dem Fluidauslass 30 des Filters 12 axial zugewandt ist, ist der Rand an der radial inneren Umfangsseite als Einführschräge 212 ausgebildet. Die Einführschräge 212 erleichtert das Einstecken des Auslassstutzens 34 in den Diffusor-Anschlussstutzen 206.

Axial hinter der Einführschräge 212 ist die radial innere Umfangsseite des Anschlussstutzens 206 als umfangsmäßige Anschluss-Dichtfläche 210 ausgestaltet. Die Anschluss-Dichtfläche 210 ist koaxial kreiszylindrisch. Bei montierter Diffusoreinrichtung 20 liegt der Dichtungsring 42, der sich am Auslassstutzen 34 des Filters 12 befindet, in radialer Richtung dichtend wirkend an der Anschluss-Dichtfläche 210 an.

Radial außerhalb des Diffusor-Anschlussstutzens 206 sind zwei beispielhaft jeweils einstückige Fixierelemente 214 in Form von Rastelementen angeordnet. Die Fixierelemente 214 befinden sich auf radial gegenüberliegenden Seiten. Die Fixierelemente 214 weisen jeweils einen sich parallel zur Diffusor-Hauptstromachse 204 erstreckenden Befestigungsarm auf. Die Befestigungsarme sind mit einem Ende über einen Steg einstückig mit der radial äußeren Umfangswand des Diffusor Anschlussstutzens 206 verbunden. Die Befestigungsarme überragen in axialer Richtung betrachtet den freien Rand des Diffusor-Anschlussstutzens 206. An den freien Enden der Befestigungsarme ist jeweils eine nach radial innen gerichtete Rastnase realisiert. Bei montierter Diffusoreinrichtung 20 rasten die Rastnasen der Fixierelemente 214 hinter den Rastkragen 38 am Auslassstutzen 34 des Filtergehäuses 14 und bilden so eine schnell verbindbare und zerstörungsfrei trennbar Rastverbindung zwischen der Diffusoreinrichtung 20 und dem Filtergehäuse 14.

Diffusor-Anschlussstutzen 206 geht auf seiner dem freien Ende axial abgewandten Seite einstückig in den Fluidleitabschnitt 202 über. Der Fluidleitabschnitt 202 selbst ist ebenfalls einstückig. Der Fluidleitabschnitt 202 umfasst insgesamt beispielhaft acht Fluidleitkanäle 216. Die Fluidleitkanäle 216 sind beispielhaft in zwei Kanalgruppen 224 angeordnet. Jede Kanalgruppe 224 umfasst vier der Fluidleitkanäle 216.

Die Fluidleitkanäle 216 haben beispielhaft identische Form und Abmessungen. Auf ihrer radial inneren Seite sind die Fluidleitkanäle 216 jeweilige Fluidverbindungsöffnungen 228 mit dem Diffusor-Einlasskanal 208 verbunden. Die Fluidleitkanäle 216 erstrecken sich zu der Diffusor-Hauptstromachse 204 schräg zur Diffusor-Hauptstromachse 204 nach radial außen. An der radial äußeren Umfangsseite weisen die Fluidleitkanäle 216 jeweils eine beispielhaft rechteckige Kanal-Auslassöffnung 230 auf.

Die Fluidleitkanäle 216 haben jeweils beispielhaft einen rechteckigen Querschnitt. Die Fluidleitkanäle 216 weiten sich in ihrer Breite, tangential zur Diffusor-Hauptstromachse 204, von ihrer jeweiligen Fluidverbindungsöffnung 228 aus betrachtet zur Kanal-Auslassöffnung 230 auf.

Jeder Fluidleitkanal 216 ist durch zwei bezüglich einer jeweiligen Kanalachse 222 gegenüberliegende zentrale Fluidleitflächen 218 und zwei, ebenfalls bezüglich der Kanalachse 222 gegenüberliegende, seitliche Fluidleitflächen 220 begrenzt. Die Fluidleitflächen 218 und 220 sind jeweils eben. Die beiden zentralen Fluidleitflächen 218 verlaufen parallel zueinander. Ebenso verlaufen die beiden seitlichen Fluidleitflächen 220 parallel zueinander. Die zentralen Fluidleitflächen 218 und die seitlichen Fluidleitflächen 220 eines Fluidkanals 216 verlaufen senkrecht zueinander. Die seitlichen Fluidleitflächen 220 haben jeweils die Form eines Parallelogramms. Die zentralen Fluidleitflächen 218 haben jeweils die Form eines gleichschenkligen Trapezes. Die zentralen Fluidleitflächen 218 einer Kanalgruppe 224 verlaufen parallel zueinander.

Die zentrale Fluidleitflächen 218 sind jeweils an zentralen Kanalwänden 225 realisiert. Benachbarte zentrale Fluidleitflächen 218 von benachbarten Fluidkanälen 216 einer Kanalgruppe 224 sind auf gegenüberliegenden Seiten derselben zentralen Kanalwand 225 realisiert. Die seitlichen Fluidleitflächen 220 auf derselben Seite einer Kanalgruppe 224 sind an einer gemeinsamen seitlichen Kanalwand 227 realisiert. Die seitlichen Kanalwände 227 haben insgesamt die Form eines Parallelogramms. Die zentralen Kanalwände 225 und die seitlichen Kanalwände 227 sind beispielhaft jeweils eben. Eine gedachte Ebene, welche durch die Ränder der Kanal-Auslassöffnungen 230 einer Kanalgruppe 224 aufgespannt wird, verläuft parallel zur Diffusor-Hauptstromachse 204. Beispielhaft verlaufen die Ebenen der Ränder der Kanal-Auslassöffnung 230 der beiden gegenüberliegenden Kanalgruppen 224 ebenfalls parallel zueinander.

Die beiden Kanalgruppen 224 mit den jeweils vier Fluidkanälen 216 sind auf bezüglich der Diffusor-Hauptstromachse 204 gegenüberliegenden Seiten angeordnet. Beispielhaft sind die Kanalgruppen 224 bezüglich einer gedachten Symmetrieebene mit der Diffusor-Hauptstromachse 204 symmetrisch angeordnet und ausgebildet. Die Kanalgruppen 224 befinden sich jeweils auf derselben Seite des Diffusor-Anschlussstutzens 206, auf der sich auch eines der Fixierelemente 214 befindet. Auf diese Weise kann die Krafteinleitung über die Fixierelemente 214 in den Auslassstutzen 34 verbessert werden.

Die Fluidkanäle 216, respektive die Kanalachsen 222, und die zentralen Fluidleitflächen 218 erstrecken sich jeweils in einem spitzen Winkel 226 zu der Diffusor-Hauptstromachse 204.

Der Winkel 226 beträgt beispielhaft etwa 120°. Der Winkel 226 kann auch einen anderen Wert, vorzugsweise zwischen 90° und 180°, aufweisen. Durch die Neigung der Fluidleitkanäle 216 und der zentralen Fluidleitflächen 218 gegenüber der Diffusor-Hauptstromachse 204 wird das in den Diffusor-Einlasskanal 208 einströmende filtrierte Fluid entsprechend umgelenkt.

Beim Betrieb des Filters 12 strömt zu filtrierendes Fluid durch den Fluideinlass 54 in den Innenraum des Gehäuseanschlussteils 24. Von dort aus strömt das zu filtrierende Fluid in einen das Filtermedium 98 radial außen umgebenen Ringraum des Gehäusetopfs 22. Aus dem Ringraum strömt das zu filtrierende Fluid das Filtermedium 98 von radial innen nach radial außen, wird mit diesem filtriert und gelangt in den Elementinnenraum 102. Das filtrierte Fluid gelangt durch das Mittelrohr 50 in den Auslassstutzen 34.

Falls das Filtermedium 98 verstopft ist gelangt das zu filtrierende Fluid direkt durch die Bypass-Ventilanordnung 18 in den Elementinnenraum 102 und von dort in den Auslassstutzen 34.

Das Fluid strömt aus dem Auslassstutzen 34 in den Diffusor-Einlasskanal 208 und strömt entlang der Diffusor-Hauptstromachse 204 in den Diffusor-Einlasskanal 208.

Das Fluid wird auf die acht Fluidleitkanäle 216 verteilt, wodurch sich insgesamt der Strömungsquerschnitt vergrößert. Durch die Vergrößerung des Strömungsquerschnitts wird die Strömung verlangsamt und beruhigt. Das so schon beruhigte Fluid wird in den Fluidleitkanälen 216 entlang der Fluidleitflächen 218 und 220 geleitet und wird aufgrund der Aufweitung der Fluidleitkanäle 216 weiter beruhigt. Außerdem wird die Strömungsrichtung des Fluids mit den Fluidleitkanälen 216 umgelenkt.

Das beruhigte Fluid gelangt durch die Kanalaustrittsöffnungen 230 in den Tank 10.

Durch die Verlangsamung der Fluidströmung wird erreicht, dass das Fluid länger in dem Tank 10 verbleibt, als es ohne die Diffusoreinrichtung 20 der Fall wäre. Auf diese Weise kann mit dem Fluid mitgetragenes Gas, beispielsweise Luft, besser abgeschieden werden. Durch die Richtungsumlenkung des Fluidstroms nach oben in Richtung der Flüssigkeitsoberfläche im Tank 10, werden auch Gasblasen in dem filtrierten Fluid gezwungen, sich zu Flüssigkeitsoberfläche zu bewegen. Dadurch werden die Gasblasen von dem Fluid getrennt werden.

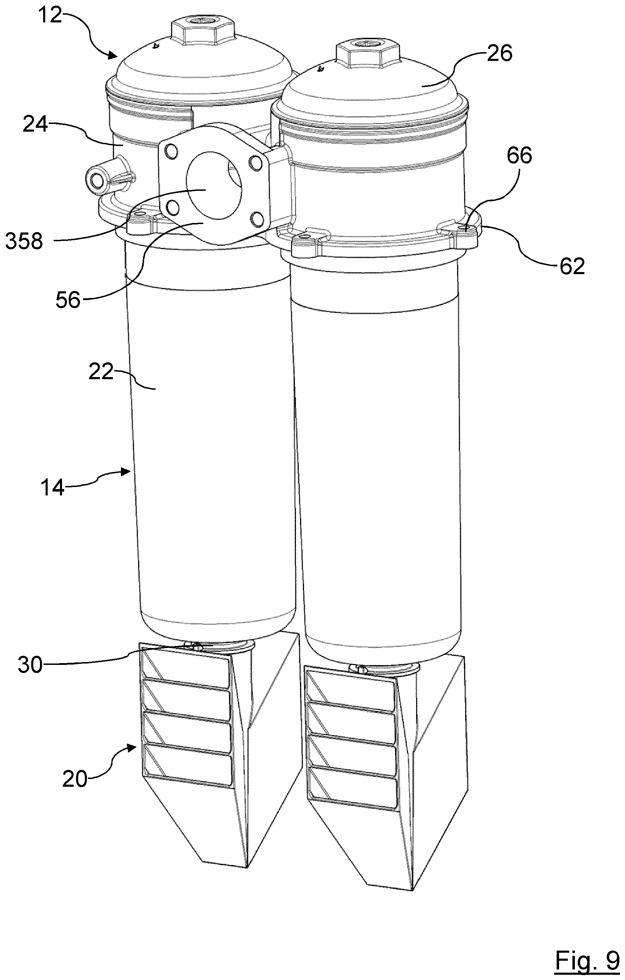

In der Figur 9 ist eine Filteranordnung mit zwei Filtern 12 gezeigt. Diejenigen Elemente, die zu dem Filter 12 aus den Figuren 1 bis 8 ähnlich sind, sind mit denselben Bezugszeichen versehen. Die Filter 12 sind fluidtechnisch parallel geschaltet. Die jeweiligen Fluideinlässe 54 sind über einen zentralen Fluideinlassstutzen 358 miteinander verbunden und über einen gemeinsamen Anschlussflansch 62 mit einer entsprechenden Fluidzuleitung verbindbar.

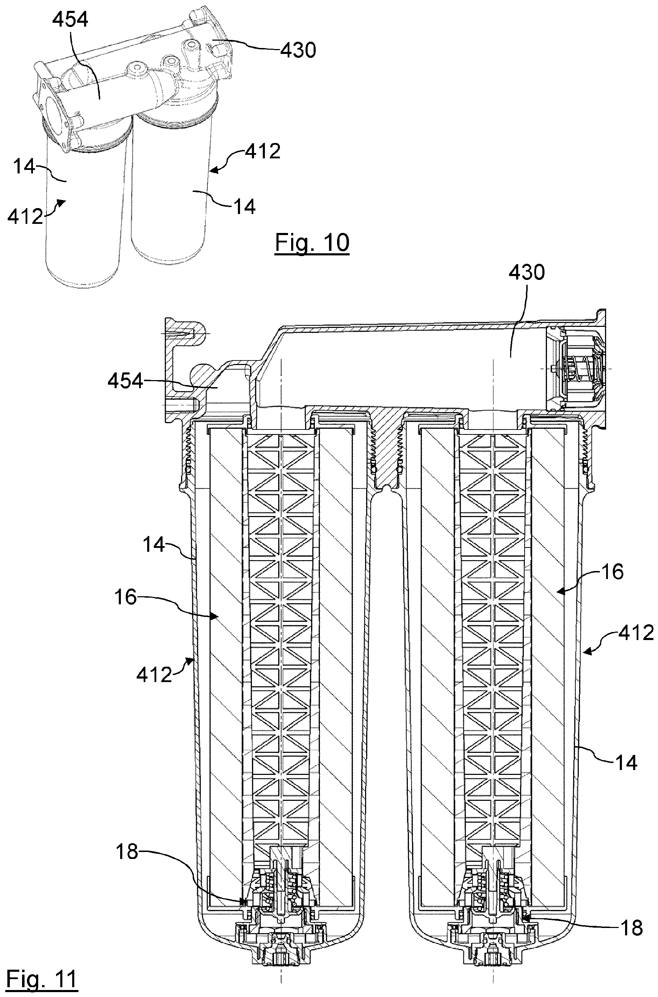

In den Figuren 10 und 11 ist eine Filteranordnung mit zwei Filtern 412 in perspektivischer Ansicht und in einem Schnitt gezeigt. Im Unterschied zu dem Filter 12 aus den Figuren 1 bis 8 sind beim zweiten Ausführungsbeispiel die Bypass-Ventilanordnungen 18 der Filter 412 räumlich unten in den Filtergehäusen 14 angeordnet. Stattdessen sind die jeweiligen Fluidauslässe 430 räumlich oben angeordnet. Auf Diffusoreinrichtungen, wie beim ersten Ausführungsbeispiel, wird bei dem Ausführungsspiel aus den Figuren 10 und 11 verzichtet.

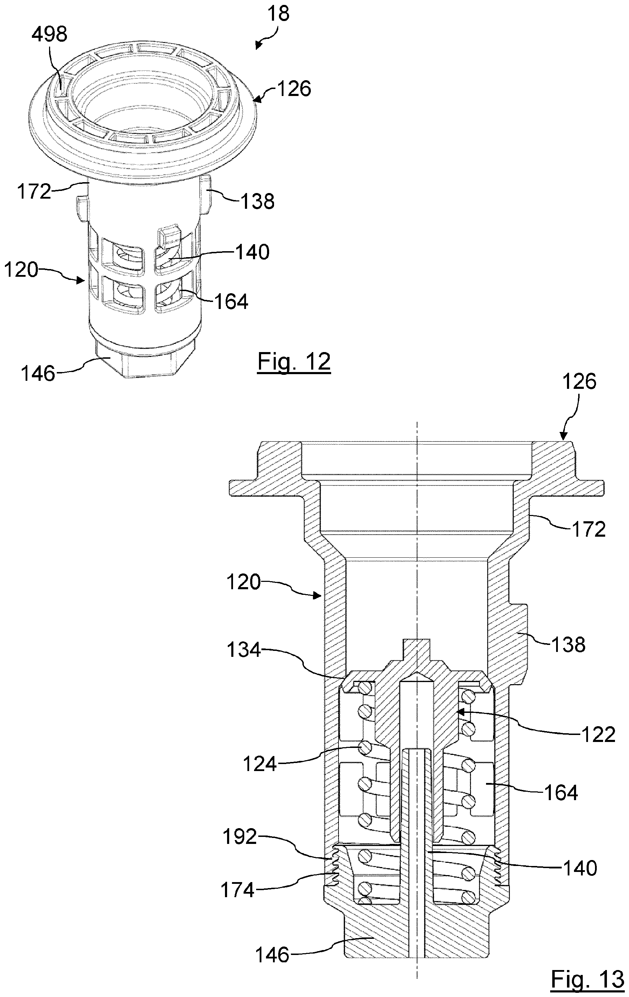

In den Figuren 12 und 13 ist eine Bypass-Ventilanordnung 18 gemäß einem zweiten Ausführungsbeispiel gezeigt. Diejenigen Elemente, die zu dem Filter 12 aus den Figuren 1 bis 8 ähnlich sind, sind mit denselben Bezugszeichen versehen. Im Unterschied zu dem ersten Ausführungsbeispiel aus den Figuren 1 bis 8 bildet beim zweiten Ausführungsbeispiel das Ventilsitzelement 126 die Umfangswand des Ventilgehäuses 120 mit. Der Ventilsitz 134 befindet sich axial etwa in der Mitte der Umfangswand des Ventilgehäuses 120. Das Ventilsitzelement-Gewinde 192 ist als Innengewinde im Bereich des freien Endes der Umfangswand ausgestaltet. Das Ventilgehäuse-Gewinde 174 ist als Außengewinde aufseiten des Bodenabschnitts 146 realisiert.

Der Führungszylinder 140 für den Ventil-Verschlusskörper 122 ist hohl. Der Führungszylinder 140 ist der beiden Enden offen und verbindet den Innenraum des Ventil-Verschlusskörpers 122 mit der Umgebung unterhalb des Bodenabschnitts 146.

Ferner sind beim zweiten Ausführungsbeispiel der Bypass-Ventilanordnung 18 statt des Handhabungselements 198 in Form eines Innensechskants mehrere Handhabungselemente 498 in Form von Öffnungen an der Stirnseite des Ventilsitzelements 26 umfangsmäßig verteilt angeordnet. Die radial äußere Umfangsseite des Bodenabschnitts 446 ist als Außensechskant ausgestaltet, an dem entsprechende Werkzeuge, beispielsweise Schraubenschlüssel oder dergleichen, zum Zusammenbau der Bypass-Ventilanordnung 18 angreifen können.

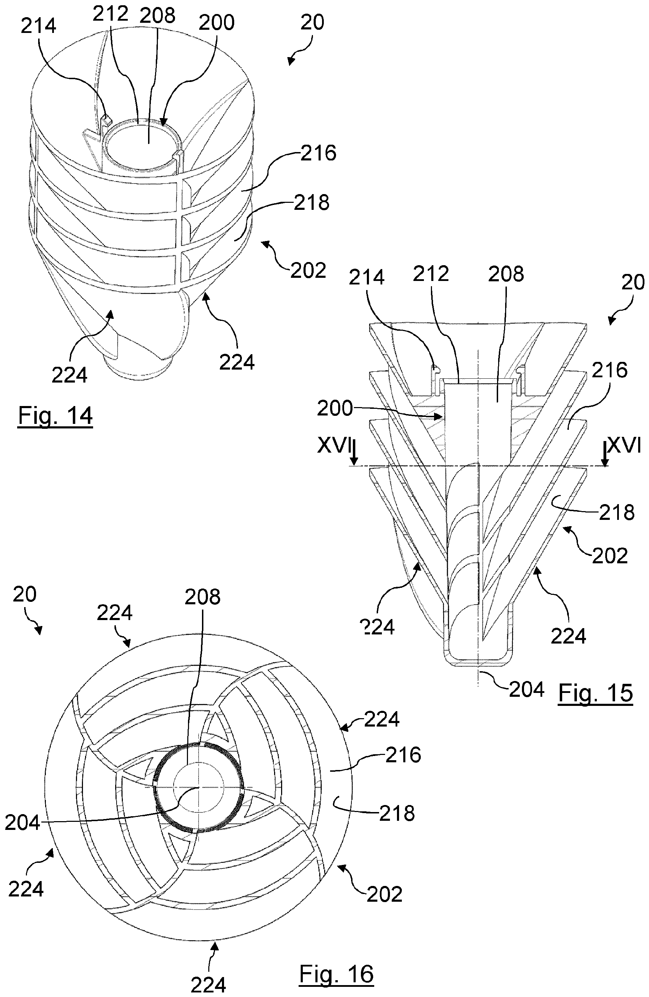

In den Figuren 14 bis 16 ist eine Diffusoreinrichtung 20 gemäß einem zweiten Ausführungsbeispiel gezeigt. Diejenigen Elemente, die zu dem Filter 12 aus den Figuren 1 bis 8 ähnlich sind, sind mit denselben Bezugszeichen versehen. Im Unterschied zu dem ersten Ausführungsbeispiel aus den Figuren 1 bis 8 sind beim zweiten Ausführungsbeispiel insgesamt vier Kanalgruppen 224 mit jeweils drei Fluidleitkanälen 216 gleichmäßig verteilt um die Diffusor-Hauptstromachse 204 angeordnet.

Die radial äußeren Ränder der zentralen Fluidleitflächen 218 verlaufen entlang eines gedachten koaxialen Kreiszylindermantels. Die Fluidleitkanäle 216 weiten sich nach außen hin auf. Die zentralen Fluidleitflächen 218 verbreitern sich in Fluidströmungsrichtung.

In axialer Richtung betrachtet verlaufen die Fluidleitkanäle 216 jeweils etwa spiralförmig. In radialer Richtung betrachtet, verlaufen die Fluidleitkanäle 216 jeweils etwa schraubenartig.

## Patentansprüche

1. Filter (12; 412) zur Filtrierung von Fluid, mit wenigstens einem Filtergehäuse (14), welches wenigstens einen Fluideinlass (54; 454) für zu filtrierendes Fluid und wenigstens einen Fluidauslass (30; 430) für filtriertes Fluid aufweist, mit wenigstens einem Filterelement (16), welches in dem wenigstens einen Filtergehäuse (14) so angeordnet ist, dass es den wenigstens einen Fluideinlass (54; 454) fluidströmungstechnisch von dem wenigstens einen Fluidauslass (30; 430) trennt, mit wenigstens einer Bypass-Ventilanordnung (18), welche fluidströmungstechnisch zwischen dem wenigstens einen Fluideinlass (54; 454) und dem wenigstens einen Fluidauslass (30; 430) so angeordnet ist, dass die wenigstens eine Bypass-Ventilanordnung (18) in ihrem Öffnungszustand den wenigstens einen Fluideinlass (54; 454) fluidströmungstechnisch mit dem wenigstens einen Fluidauslass (30; 430) verbindet, wobei die wenigstens eine Bypass-Ventilanordnung (18) wenigstens einen Ventil-Verschlusskörper (122), welcher zwischen wenigstens einer Schließstellung und wenigstens einer Öffnungsstellung bewegbar ist, und wenigstens einen Ventilsitz (134), an den der wenigstens eine Ventil-Verschlusskörper (122) in wenigstens einer Schließstellung dicht anliegen kann, aufweist, **dadurch gekennzeichnet, dass** die wenigstens eine Bypass-Ventilanordnung (18) wenigstens ein Ventilgehäuse (120), in dem der wenigstens eine Ventil-Verschlusskörper (122) bewegbar angeordnet ist, und wenigstens ein Ventilsitzelement (126), welches wenigstens einen Ventilsitz (134) aufweist, aufweist, wobei das wenigstens eine Ventilsitzelement (126) mittels wenigstens einer mechanischen Verbindung (174, 192) mit wenigstens einem Teil (170; 146) des wenigstens einen Ventilgehäuses (120) verbunden ist, wobei die Verbindung mittels wenigstens einer Relativdrehung zwischen dem wenigstens einen Ventilsitzelement (126) und dem wenigstens einen Teil (170; 146) des wenigstens einen Ventilgehäuses (120) um eine gedachte Ventilachse (128) der wenigstens eine Bypass-Ventilanordnung (18) realisierbar ist, wobei das Ventilgehäuse (120) wenigstens einen bezüglich der Ventilachse (128) wenigstens einen radial wirkenden Ventil-Dichtabschnitt (170; 172) aufweist, welcher dichtend mit wenigstens einem Element-Dichtabschnitt (116; 118) aufseiten wenigstens eines Filterelements (16) zusammenwirkt, wobei wenigstens ein Ventilsitzelement (126) wenigstens ein Gehäuse-Befestigungselement (178) aufweist, mit dem das wenigstens eine Ventilsitzelement (126) mit wenigstens einem Teil des Filtergehäuses (14) verbindbar ist, wobei wenigstens ein Gehäuse-Befestigungselement (176) wenigstens des Ventilsitzelements (126) wenigstens einen Rasthaken und/oder eine Rasthakenanordnung aufweist, wobei das wenigstens eine Ventilsitzelement (126), insbesondere mittels wenigstens eines Gehäuse-Befestigungselements (126), mit einem Gehäusedeckel (26) des Filtergehäuses (14) verbindbar ist.

2. Filter nach Anspruch 1, **dadurch gekennzeichnet, dass** die wenigstens eine mechanische Verbindung (174, 192) zwischen dem wenigstens einen Ventilsitzelement (126) und dem wenigstens einen Teil (170; 146) des wenigstens einen Ventilgehäuses (120) eine Schraubverbindung ist.

3. Filter nach Anspruch 1 oder 2, **dadurch gekennzeichnet, dass** wenigstens ein Ventilsitzelement (126) wenigstens ein Gewinde (192), insbesondere ein Außengewinde und/oder ein Innengewinde, und/oder der wenigstens eine Teil (170; 146) des wenigstens einen Ventilgehäuses (120) wenigstens ein Gewinde (174), insbesondere ein Innengewinde und/oder ein Außengewinde, aufweist und/oder wenigstens ein Gewinde (192) wenigstens eines Ventilsitzelements (126) und/oder wenigstens ein Gewinde (174) des wenigstens einen Teils (170; 146) des wenigstens einen Ventilgehäuses (120) ein nicht selbstschneidendes Gewinde ist und/oder wenigstens ein Gewinde wenigstens eines Ventilsitzelements und/oder wenigstens ein Gewinde des wenigstens einen Teils des wenigstens einen Ventilgehäuses ein selbstschneidendes Gewinde ist.

4. Filter nach einem der vorigen Ansprüche, **dadurch gekennzeichnet, dass** wenigstens ein Ventilsitzelement (126) wenigstens ein Gehäuse-Befestigungselement (178) aufweist, mit dem das wenigstens eine Ventilsitzelement (126) mit wenigstens einem Teil des wenigstens einen Filtergehäuses (14) verbunden ist.

5. Filter nach einem der vorigen Ansprüche, **dadurch gekennzeichnet, dass** wenigstens ein Ventilsitzelement (126) wenigstens einen Handhabungsabschnitt (194) aufweist, an dem das wenigstens eine Ventilsitzelement (126) zum Verbinden mit dem wenigstens einen Ventilgehäuse (120) gehandhabt werden kann.

6. Filter nach einem der vorigen Ansprüche, **dadurch gekennzeichnet, dass** wenigstens eine Bypass-Ventilanordnung (18) wenigstens ein Ventil-Rückstellelement (124) aufweist, welches an wenigstens einem Ventil-Verschlusskörper (122) einerseits und wenigstens einem Ventilgehäuse (120) andererseits angreift.

7. Filter nach einem der vorigen Ansprüche, **dadurch gekennzeichnet, dass** wenigstens ein Ventilsitzelement (126) und/oder der wenigstens eine Teil (170; 146) des wenigstens einen Ventilgehäuses (120) wenigstens eine Dichteinrichtung (186, 196) aufweist zur Abdichtung eines Bereichs zwischen dem wenigstens einen Ventilsitzelement (126) und dem wenigstens einen Teil (170; 146) des wenigstens einen Ventilgehäuses (120).

8. Filter nach einem der vorigen Ansprüche, **dadurch gekennzeichnet, dass** der Filter (12; 412) ein In-Tank-Filter ist und/oder der Filter ein Flüssigkeitsfilter und/oder ein Gasfilter ist.

9. Filter nach einem der vorigen Ansprüche, **dadurch gekennzeichnet, dass** wenigstens ein Ventilsitzelement (126) ein Hohlzylinder mit wenigstens einem Gewinde (192), insbesondere Innengewinde und/oder Außengewinde, ist.

10. Filter nach einem der vorigen Ansprüche, **dadurch gekennzeichnet, dass** der Filter (12) wenigstens eine Diffusoreinrichtung (20) aufweist, welche mit wenigstens einem Fluidauslass (30) verbunden ist.

11. Bypass-Ventilanordnung (18) für einen Filter (12; 412) zur Filtrierung von Fluid, wobei die Bypass-Ventilanordnung (18) fluidströmungstechnisch zwischen wenigstens einem Fluideinlass (54; 454) und wenigstens einem Fluidauslass (30; 430) des Filters (12; 412) so angeordnet werden kann, dass die wenigstens eine Bypass-Ventilanordnung (18) in ihrem Öffnungszustand den wenigstens einen Fluideinlass (54; 454) fluidströmungstechnisch mit dem wenigstens einen Fluidauslass (30; 430) verbindet, und wobei die wenigstens eine Bypass-Ventilanordnung (18) wenigstens einen Ventil-Verschlusskörper (122), welcher zwischen wenigstens einer Schließstellung und wenigstens einer Öffnungsstellung bewegbar ist, und wenigstens einen Ventilsitz (134), an den der wenigstens eine Ventil-Verschlusskörper (122) in wenigstens einer Schließstellung dicht anliegen kann, aufweist, **dadurch gekennzeichnet, dass** die wenigstens eine Bypass-Ventilanordnung (18) wenigstens ein Ventilgehäuse (120), in dem der wenigstens eine Ventil-Verschlusskörper (122) bewegbar angeordnet ist, und wenigstens ein Ventilsitzelement (126), welches wenigstens einen Ventilsitz (134) aufweist, aufweist, wobei das wenigstens eine Ventilsitzelement (126) mittels wenigstens einer mechanischen Verbindung mit wenigstens einem Teil (170; 146) des wenigstens einen Ventilgehäuses (120) verbunden ist, wobei die mechanische Verbindung mittels wenigstens einer Relativdrehung zwischen dem wenigstens einen Ventilsitzelement (126) und dem wenigstens einen Teil (170; 146) des wenigstens einen Ventilgehäuses (120) um eine gedachte Ventilachse (128) der wenigstens eine Bypass-Ventilanordnung (18) realisierbar ist, wobei das Ventilgehäuse (120) wenigstens einen bezüglich der Ventilachse (128) wenigstens einen radial wirkenden Ventil-Dichtabschnitt (170; 172) aufweist, welcher dichtend mit wenigstens einem Element-Dichtabschnitt (116; 118) aufseiten wenigstens eines Filterelements (16) zusammenwirken kann, wobei wenigstens ein Ventilsitzelement (126) wenigstens ein Gehäuse-Befestigungselement (178) aufweist, mit dem das wenigstens eine Ventilsitzelement (126) mit wenigstens einem Teil des Filtergehäuses (14) verbindbar ist, wobei wenigstens ein Gehäuse-Befestigungselement (176) wenigstens des Ventilsitzelements (126) wenigstens einen Rasthaken und/oder eine Rasthakenanordnung aufweist, wobei das wenigstens eine Ventilsitzelement, insbesondere mittels wenigstens eines Gehäuse-Befestigungselements (126), mit einem Gehäusedeckel (26) des Filtergehäuses (14) verbindbar ist.

12. Filterelement (16) für einen Filter (12; 412) nach einem der Ansprüche 1 bis 10, zur Filtrierung von Fluid, mit wenigstens einer Bypass-Ventilanordnung (18) nach Anspruch 11, die an einem Endkörper (108) des Filterelements (16) so befestigt ist, dass die wenigstens eine Bypass-Ventilanordnung (18) in ihrem Öffnungszustand wenigstens eine Rohfluidseite des Filterelements (16) fluidströmungstechnisch mit wenigstens einer Reinfluidseite des Filterelements (16) verbindet, wobei die wenigstens eine Bypass-Ventilanordnung (18) wenigstens einen Ventil-Verschlusskörper (122), welcher zwischen wenigstens einer Schließstellung und wenigstens einer Öffnungsstellung bewegbar ist, und wenigstens einen Ventilsitz (134), an den der wenigstens eine Ventil-Verschlusskörper (122) in wenigstens einer Schließstellung dicht anliegen kann, aufweist, wobei das Filterelement (16) wenigstens eine Aufnahme (108, 102) für wenigstens eine Bypass-Ventilanordnung (18) aufweist, **dadurch gekennzeichnet, dass** an einem Endkörper des Filterelementes (16) wenigstens ein Element-Dichtabschnitt angeordnet ist mit dem wenigstens ein Ventil-Dichtabschnitt aufseiten einer wenigstens einen Bypass-Ventilanordnung dichtend zusammenwirkt.

## Claims

1. A filter (12; 412) for filtering fluid, having at least one filter housing (14) featuring at least one fluid inlet (54; 454) for fluid to be filtered and at least one fluid outlet (30; 430) for filtered fluid, having at least one filter element (16) disposed in the at least one filter housing (14) in such a way that it separates the at least one fluid inlet (54; 454) from the at least one fluid outlet (30; 430) in terms of fluid flow, having at least one bypass valve arrangement (18) disposed in terms of fluid flow between the at least one fluid inlet (54; 454) and the at least one fluid outlet (30; 430) in such a way that the at least one bypass valve arrangement (18) connects, in its open state, the at least one fluid inlet (54; 454) to the at least one fluid outlet (30; 430) in terms of fluid flow, wherein the at least one bypass valve arrangement (18) features at least one valve closure element (122) movable between at least one closed position and at least one open position, and at least one valve seat (134), against which the at least one valve closure element (122) can sealingly rest in at least one closed position, **characterized in that** the at least one bypass valve arrangement (18) features at least one valve housing (120), in which the at least one valve closure element (122) is movably disposed, and at least one valve seat element (126) featuring at least one valve seat (134), wherein the at least one valve seat element (126) is connected to at least one part (170; 146) of the at least one valve housing (120) using at least one mechanical connection (174, 192), wherein the connection is realizable using at least one relative rotation between the at least one valve seat element (126) and the at least one part (170; 146) of the at least one valve housing (120) about an imaginary valve axis (128) of the at least one bypass valve arrangement (18), wherein the valve housing (120) features at least one radially acting valve sealing section (170; 172) with respect to the valve axis (128), said valve sealing section interacting sealingly with at least one element sealing section (116; 118) on the side of at least one filter element (16), wherein at least one valve seat element (126) features at least one housing fastening element (178) by which the at least one valve seat element (126) is connectable to at least one part of the filter housing (14), wherein at least one housing fastening element (176) of at least the valve seat element (126) features at least one snap-in hook and/or a snap-in hook arrangement, wherein the at least one valve seat element (126) is connectable to a housing cover (26) of the filter housing (14), in particular using at least one housing fastening element (126).

2. The filter according to claim 1, **characterized in that** the at least one mechanical connection (174, 192) between the at least one valve seat element (126) and the at least one part (170; 146) of the at least one valve housing (120) is a screwed connection.

3. The filter according to claim 1 or 2, **characterized in that** at least one valve seat element (126) features at least one thread (192), in particular an external thread and/or an internal thread, and/or that the at least one part (170; 146) of the at least one valve housing (120) features at least one thread (174), in particular an internal thread and/or an external thread, and/or that at least one thread (192) of at least one valve seat element (126) and/or at least one thread (174) of the at least one part (170; 146) of the at least one valve housing (120) is a non-self-tapping thread and/or that at least one thread of at least one valve seat element and/or at least one thread of the at least one part of the at least one valve housing is a self-tapping thread.

4. The filter according to one of the preceding claims, **characterized in that** the at least one valve seat element (126) features at least one housing fastening element (178) by which the at least one valve seat element (126) is connected to at least one part of the at least one filter housing (14).

5. The filter according to one of the preceding claims, **characterized in that** at least one valve seat element (126) features at least one handling section (194) at which the at least one valve seat element (126) can be handled for being connected to the at least one valve housing (120).

6. The filter according to one of the preceding claims, **characterized in that** at least one bypass valve arrangement (18) features at least one valve return element (124) engaging on at least one valve closure element (122) on the one hand and at least one valve housing (120) on the other hand.

7. The filter according to one of the preceding claims, **characterized in that** at least one valve seat element (126) and/or the at least one part (170; 146) of the at least one valve housing (120) features at least one sealing means (186, 196) for sealing an area between the at least one valve seat element (126) and the at least one part (170; 146) of the at least one valve housing (120).

8. The filter according to one of the preceding claims, **characterized in that** the filter (12; 412) is an in-tank filter and/or that the filter is a liquid filter and/or a gas filter.

9. The filter according to one of the preceding claims, **characterized in that** at least one valve seat element (126) is a hollow cylinder with at least one thread (192), in particular internal thread and/or external thread.

10. The filter according to one of the preceding claims, **characterized in that** the filter (12) features at least one diffuser device (20) connected to at least one fluid outlet (30).

11. A bypass valve arrangement (18) for a filter (12; 412) for filtering fluid, wherein the bypass valve arrangement (18) can be disposed in terms of fluid flow between at least one fluid inlet (54; 454) and at least one fluid outlet (30; 430) of the filter (12; 412) in such a way that the at least one bypass valve arrangement (18), in its open state, connects the at least one fluid inlet (54; 454) in terms of fluid flow to the at least one fluid outlet (30; 430), and wherein the at least one bypass valve arrangement (18) features at least one valve closure element (122) movable between at least one closed position and at least one open position, and at least one valve seat (134), against which the at least one valve closure element (122) can sealingly rest in at least one closed position, **characterized in that** the at least one bypass valve arrangement (18) features at least one valve housing (120), in which the at least one valve closure element (122) is movably disposed, and at least one valve seat element (126) featuring at least one valve seat (134), wherein the at least one valve seat element (126) is connected to at least one part (170; 146) of the at least one valve housing (120) using at least one mechanical connection, wherein the mechanical connection is realizable using at least one relative rotation between the at least one valve seat element (126) and the at least one part (170; 146) of the at least one valve housing (120) about an imaginary valve axis (128) of the at least one bypass valve arrangement (18), wherein the valve housing (120) features at least one radially acting valve sealing section (170; 172) with respect to the valve axis (128), said valve sealing section being able to interact sealingly with at least one element sealing section (116; 118) on the side of at least one filter element (16), wherein at least one valve seat element (126) features at least one housing fastening element (178) by which the at least one valve seat element (126) is connectable to at least one part of the filter housing (14), wherein at least one housing fastening element (176) of at least the valve seat element (126) features at least one snap-in hook and/or a snap-in hook arrangement, wherein the at least one valve seat element is connectable to a housing cover (26) of the filter housing (14), in particular using at least one housing fastening element (126).

12. A filter element (16) for a filter (12; 412) according to one of the claims 1 to 10, for filtering fluid, having at least one bypass valve arrangement (18) according to claim 11 attached to an end body (108) of the filter element (16) in such a way that, in its open state, the at least one bypass valve arrangement (18) connects at least one raw fluid side of the filter element (16) in terms of fluid flow to at least one clean fluid side of the filter element (16), wherein the at least one bypass valve arrangement (18) features at least one valve closure element (122) movable between at least one closed position and at least one open position, and at least one valve seat (134), against which the at least one valve closure element (122) can sealingly rest in at least one closed position, wherein the filter element (16) features at least one accommodating means (108, 102) for at least one bypass valve arrangement (18), **characterized in that** at least one element sealing section, with which at least one valve sealing section on the side of an at least one bypass valve arrangement cooperates in a sealing manner, is disposed on an end body of the filter element (16).

## Revendications

1. Filtre (12; 412) destiné au filtrage de fluides, ayant au moins un boîtier de filtre (14) présentant au moins une entrée de fluide (54; 454) pour le fluide à filtrer et au moins une sortie de fluide (30; 430) pour le fluide filtré, ayant au moins un élément filtrant (16) disposé dans le boîtier de filtre (14), au moins au nombre d'un, de telle sorte qu'il sépare l'entrée de fluide (54; 454), au moins au nombre d'une, du point de vue du flux de fluide, de la sortie de fluide (30; 430), au moins au nombre d'une, ayant au moins un ensemble de soupapes de dérivation (18) qui, du point de vue du flux de fluide, est disposé entre l'entrée de fluide (54; 454), au moins au nombre d'une, et la sortie de fluide (30; 430), au moins au nombre d'une, de telle sorte que l'ensemble de soupapes de dérivation (18), au moins au nombre d'un, relie, en position ouverte, l'entrée de fluide (54; 454), au moins au nombre d'une, du point de vue du flux de fluide, à la sortie de fluide (30; 430), au moins au nombre d'une, l'ensemble de soupapes de dérivation (18), au moins au nombre d'un, présentant au moins un élément de fermeture de soupape (122), lequel pouvant se déplacer entre au moins une position de fermeture et au moins une position d'ouverture, et au moins un siège de soupape (134) sur lequel l'élément de fermeture de soupape (122), au moins au nombre d'un, peut être en contact de manière étanche dans au moins une position de fermeture, **caractérisé en ce que** l'ensemble de soupapes de dérivation (18), au moins au nombre d'un, présente une cage de soupape (120) dans laquelle est disposé l'élément de fermeture de soupape (122), au moins au nombre d'un, de façon mobile, et au moins un élément de siège de soupape (126) présentant au moins un siège de soupape (134), l'élément de siège de soupape (126), au moins au nombre d'un, étant relié au moyen d'au moins une liaison mécanique (174, 192) à au moins une partie (170; 146) de la cage de soupape (120), au moins au nombre d'une, la liaison pouvant être réalisée au moins par une rotation relative entre l'élément de siège de soupape (126), au moins au nombre d'un, et la partie (170; 146), au moins au nombre d'une, de la cage de soupape (120), au moins au nombre d'une, autour d'un axe de soupape imaginaire (128) de l'ensemble de soupapes de dérivation (18), au moins au nombre d'un, la cage de soupape (120) présentant au moins une section d'étanchéité de soupape (170; 172) à effet radial par rapport à l'axe de soupape (128), laquelle interagit de manière étanche avec au moins une section d'étanchéité d'élément (116; 118) du côté d'au moins un élément filtrant (16), au moins un élément de siège de soupape (126) présentant au moins un élément de fixation de boîtier (178) au moyen duquel l'élément de siège de soupape (126), au moins au nombre d'un, peut être relié à au moins une partie du boîtier de filtre (14), au moins un élément de fixation de boîtier (176) au moins de l'élément de siège de soupape (126) présentant au moins un crochet d'encliquetage et/ou un ensemble de crochets d'encliquetage, l'élément de siège de soupape (126), au moins au nombre d'un, pouvant être relié, notamment au moyen d'au moins un élément de fixation de boîtier (126), à un couvercle de boîtier (26) du boîtier de filtre (14).

2. Filtre selon la revendication 1, **caractérisé en ce que** la liaison mécanique (174, 192), au moins au nombre d'une, entre l'élément de siège de soupape (126), au moins au nombre d'un, et la partie (170; 146), au moins au nombre d'une, de la cage de soupape (120), au moins au nombre d'une, étant un raccord vissé.

3. Filtre selon la revendication 1 ou 2, **caractérisé en ce qu'au** moins un élément de siège de soupape (126) présente au moins un filet (192), notamment un filet extérieur et/ou un filet intérieur, et/ou que la partie (170; 146), au moins au nombre d'une, de la cage de soupape (120), au moins au nombre d'une, présente au moins un filet (174), notamment un filet intérieur et/ou un filet extérieur, et/ou qu'au moins un filet (192) au moins d'un élément de siège de soupape (126) et/ou au moins un filet (174) de la partie (170; 146), au moins au nombre d'une, de la cage de soupape (120), au moins au nombre d'une, est un filet non autotaraudant, et/ou qu'au moins un filet d'au moins un élément de siège de soupape et/ou au moins un filet de la partie, au moins au nombre d'une, de la de la cage de soupape, au moins au nombre d'une, est un filet autotaraudant.

4. Filtre selon l'une quelconque des revendications précédentes, **caractérisé en ce qu'au** moins un élément de siège de soupape (126) présente au moins un élément de fixation de boîtier (178) au moyen duquel l'élément de siège de soupape (126), au moins au nombre d'un, est relié à au moins une partie du boîtier de filtre (14), au moins au nombre d'un.

5. Filtre selon l'une quelconque des revendications précédentes, **caractérisé en ce qu'au** moins un élément de siège de soupape (126) présente au moins une section de manipulation (194) au moyen de laquelle l'élément de siège de soupape (126), au moins au nombre d'un, peut être manipulé pour être relié à la cage de soupape (120), au moins au nombre d'une.

6. Filtre selon l'une quelconque des revendications précédentes, **caractérisé en ce qu'au** moins un ensemble de soupapes de dérivation (18) présente au moins un élément de rappel de soupape (124) qui est en prise avec au moins un élément de fermeture de soupape (122), d'une part, et avec au moins une cage de soupape (120), d'autre part.

7. Filtre selon l'une quelconque des revendications précédentes, **caractérisé en ce qu'au** moins un élément de siège de soupape (126) et/ou la partie (170; 146), au moins au nombre d'une, de la cage de soupape (120), au moins au nombre d'une, présente au moins un dispositif d'étanchéité (186, 196) destiné à étancher une zone entre l'élément de siège de soupape (126), au moins au nombre d'un, et la partie (170; 146), au moins au nombre d'une, de la cage de soupape (120), au moins au nombre d'une.

8. Filtre selon l'une quelconque des revendications précédentes, **caractérisé en ce que** le filtre (12; 412) est un filtre interne et/ou que le filtre est un filtre à liquide et/ou un filtre à gaz.

9. Filtre selon l'une quelconque des revendications précédentes, **caractérisé en ce qu'au** moins un élément de siège de soupape (126) est un cylindre creux avec au moins un filet (192), notamment un filet intérieur et/ou un filet extérieur.

10. Filtre selon l'une quelconque des revendications précédentes, **caractérisé en ce que** le filtre (12) présente au moins un dispositif diffuseur (20) relié à au moins une sortie de fluide (30).

11. Ensemble de soupapes de dérivation (18) pour un filtre (12; 412) destiné au filtrage de fluides, l'ensemble de soupapes de dérivation (18) pouvant être disposé, du point de vue du flux de fluide, entre au moins une entrée de fluide (54; 454) et au moins une sortie de fluide (30; 430) du filtre (12; 412) de telle sorte que l'ensemble de soupapes de dérivation (18), au moins au nombre d'un, relie, en position d'ouverture, l'entrée de fluide (54; 454), au moins au nombre d'une, du point de vue du flux de fluide, à la sortie de fluide (30; 430) au moins au nombre d'une, et l'ensemble de soupapes de dérivation (18), au moins au nombre d'un, présentant au moins un élément de fermeture de soupape (122), lequel pouvant se déplacer entre au moins une position de fermeture et au moins une position d'ouverture, et au moins un siège de soupape (134) sur lequel l'élément de fermeture de soupape (122), au moins au nombre d'un, peut être en contact de manière étanche dans au moins une position de fermeture, **caractérisé en ce que** l'ensemble de soupapes de dérivation (18), au moins au nombre d'un, présente une cage de soupape (120) dans laquelle est disposé l'élément de fermeture de soupape (122), au moins au nombre d'un, de façon mobile, et au moins un élément de siège de soupape (126) présentant au moins un siège de soupape (134), l'élément de siège de soupape (126), au moins au nombre d'un, étant relié au moyen d'au moins une liaison mécanique à au moins une partie (170; 146) de la cage de soupape (120), au moins au nombre d'une, la liaison mécanique pouvant être réalisée au moins par une rotation relative entre l'élément de siège de soupape (126), au moins au nombre d'un, et la partie (170; 146), au moins au nombre d'une, de la cage de soupape (120), au moins au nombre d'une, autour d'un axe de soupape imaginaire (128) de l'ensemble de soupapes de dérivation (18), au moins au nombre d'un, la cage de soupape (120) présentant au moins une section d'étanchéité de soupape (170; 172) à effet radial par rapport à l'axe de soupape (128) qui peut interagir de manière étanche avec au moins une section d'étanchéité d'élément (116; 118) du côté d'au moins un élément filtrant (16), au moins un élément de siège de soupape (126) présentant au moins un élément de fixation de boîtier (178) au moyen duquel l'élément de siège de soupape (126), au moins au nombre d'un, peut être relié à au moins une partie du boîtier de filtre (14), au moins un élément de fixation de boîtier (176) au moins de l'élément de siège de soupape (126) présentant au moins un crochet d'encliquetage et/ou un ensemble de crochets d'encliquetage, l'élément de siège de soupape, au moins au nombre d'un, pouvant être relié, notamment au moyen d'au moins un élément de siège de soupape (126), à un couvercle de boîtier (26) du boîtier de filtre (14).

12. Élément filtrant (16) pour un filtre (12; 412) selon l'une quelconque des revendications 1 à 10, destiné au filtrage de fluides, avec au moins un ensemble de soupapes de dérivation (18) selon la revendication 11 qui est fixé à un élément d'extrémité (108) de l'élément filtrant (16) de telle sorte que l'ensemble de soupapes de dérivation (18), au moins au nombre d'un, en position d'ouverture, relie au moins un côté de fluide brut de l'élément filtrant (16), du point de vue du flux de fluide, à au moins un côté de fluide pur de l'élément filtrant (16), l'ensemble de soupapes de dérivation (18), au moins au nombre d'un, présentant au moins un élément de fermeture de soupape (122), lequel pouvant se déplacer entre au moins une position de fermeture et au moins une position d'ouverture, et au moins un siège de soupape (134) sur lequel l'élément de fermeture de soupape (122), au moins au nombre d'un, peut être en contact de manière étanche dans au moins une position de fermeture, l'élément filtrant (16) présentant au moins un logement (108, 102) pour au moins un ensemble de soupapes de dérivation (18), **caractérisé en ce qu'au** moins une section d'étanchéité d'élément est disposée sur un élément d'extrémité de l'élément filtrant (16), avec laquelle au moins une section d'étanchéité de soupape interagit de manière étanche du côté d'au moins un ensemble de soupapes de dérivation.
